# NEUE EUROPÄISCHE PATENTSCHRIFT

(11) **EP 0 438 547 B2**
(45) Veröffentlichungstag und Bekanntmachung des Hinweises auf die Entscheidung über den Einspruch: **07.07.1999**
(45) Hinweis auf die Patenterteilung: 14.12.1994
(21) Anmeldenummer: 90909669.5
(22) Anmeldetag: 15.06.1990
(51) Int. Cl.: C09K 19/42, G02F 1/137

(54) **SUPERTWIST-FLÜSSIGKRISTALLANZEIGE**
SUPER-TWIST LIQUID CRYSTAL DISPLAY
AFFICHAGE A CRISTAUX LIQUIDES SUPERTWISTES

(30) Priorität: 13.07.1989 DE 3923064
(43) Veröffentlichungstag der Anmeldung: 31.07.1991
(73) Patentinhaber: MERCK PATENT GmbH, 64271 Darmstadt (DE)
(72) Erfinder: SCHEUBLE, Bernhard, D-6104 Seeheim-Jugenheim (DE); OYAMA, Takamasa Komachi Corp. 207, Yamato-City Kanagawa (JP); WEBER, Georg, D-6106 Erzhausen (DE); PLACH, Herbert, D-6100 Darmstadt (DE); KURMEIER, Hans-Adolf, D-6104 Seeheim-Jugenheim (DE); REIFFENRATH, Volker, D-6101 Rossdorf (DE)
(86) Internationale Anmeldenummer: EP9000936
(87) Internationale Veröffentlichungsnummer: WO9100898

(56) Entgegenhaltungen:
- EP-A- 0 261 614
- EP-A- 0 316 186
- EP-A- 0 364 588
- EP-A- 0 365 962
- EP-A- 0 366 985
- WO-A-00/04622
- WO-A-89/03867
- WO-A-89/08692
- JP-A- 63 196 685

## Beschreibung

Die Erfindung betrifft Supertwist-Flüssigkristallanzeigen (SFA) mit sehr kurzen Schaltzeiten und guten Steilheiten und Winkelabhängigkeiten sowie die darin verwendeten neuen nematischen Flüssigkristallmischungen.

SFA gemäß des Oberbegriffs sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts. SID 87 Digest 372 (20.1); K. Katoh et al., Japanese Journal of Applied Physics, Vol. 26. No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff SFA umfaßt hier jedes höher verdrillte Anzeigeelement mit einem Verdrillungswinkel dem Betrage nach zwischen 100° und 600°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236, DST-LCD's (EP OS 0 246 842) oder BW-STN-LCD's (K. Kawasaki et al., SID 87 Digest 391 (20.6)).

Derartige SFA zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind SFA mit sehr kurzen Schaltzeiten insbesondere auch bei tieferen Temperaturen. Zur Erzielung von kurzen Schaltzeiten wurden bisher insbesondere die Viskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Zur Erzielung einer steilen elektrooptischen Kennlinie sollen die Flüssigkristallmischungen relativ große weite Werte für K₃/K₁ und relativ kleine Werte für Δε/ε⊥ aufweisen.

Über die Optimierung des Kontrastes und der Schaltzeiten hinaus werden an derartige Mischungen weitere wichtige Anforderungen gestellt:
1. Breites d/p-Fenster
2. Hohe chemische Dauerstabilität
3. Hoher elektrischer Widerstand
4. Geringe Frequenzabhängigkeit der Schwellenspannung.

Die erzielten Parameterkombinationen sind bei weitem noch nicht ausreichend, insbesondere für Hochmultiplex-STN (1/400). Zum Teil ist dies darauf zurückzuführen, daß die verschiedenen Anforderungen durch Materialparameter gegenläufig beeinflußt werden.

In EP 0,366,985 werden Flüssigkristallmischungen für STN-Anzeigen beschrieben, die terminal fluorierte Verbindungen der Formel 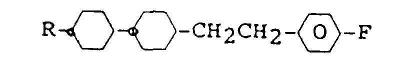 aufweisen. Die dort beschriebenen Mischungen werden jedoch nicht allen technischen Anforderungen gerecht. Dies gilt ebenfalls für die in EP 0,261,614 beschriebenen STN-Anzeigen, deren Flüssigkristallmischungen terminal durch - NCS substituierte Verbindungen enthalten.

In EP 0,365,962 werden Flüssigkristallmischungen für Aktiv-Matrix-Anwendungen vorgeschlagen, die jedoch einen relativ niedrigen Anteil an Cyanverbindungen aufweisen und daher oftmals unvorteilhafte Werte für die Schwellenspannung aufweisen.

EP 0 280 902, EP 0 364 589, WP 90/04622 und JP 63-196 685 beschreiben Flüssigkristallzusammensetzungen für SFA die jedoch relativ hohe Anteile an Cyanoverbindungen enthalten und daher unvorteilhafte Schaltzeiten und teilweise auch unzureichende Klärpunkte bzw. niedrige Doppelbrechungswerte aufweisen.

Es besteht somit immer noch ein großer Bedarf nach SFA mit sehr kurzen Schaltzeiten bei gleichzeitig großem Arbeitstemperaturbereich, hoher Kennliniensteilheit, guter Winkelabhängigkeit des Kontrastes und niedriger Schwellenspannung, die den obenangegebenen Anforderungen gerecht werden.

Der Erfindung liegt die Aufgabe zugrunde, SFA bereitzustellen, die die oben angegebenen Nachteile nicht oder nur in geringerem Maße und gleichzeitig sehr kurze Schaltzeiten aufweisen.

Es wurde nun gefunden, daß diese Aufgabe gelöst werden kann, wenn die nematische Flüssigkristallmischung
a) auf Komponente A, enthaltend eine oder mehrere Verbindungen, ausgewählt aus der Gruppe A, bestehend aus Verbindungen der Formeln IIa - IIc und IIe - IIk, basiert: 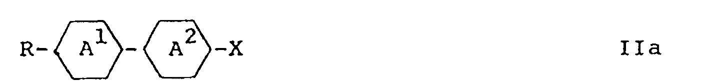 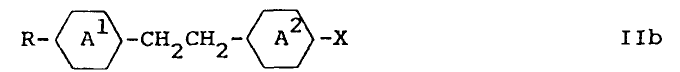 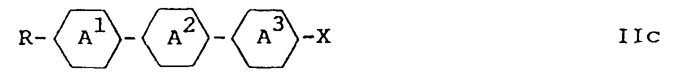 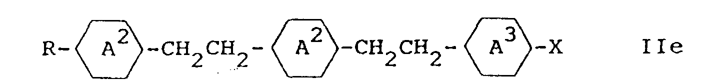 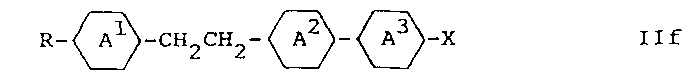 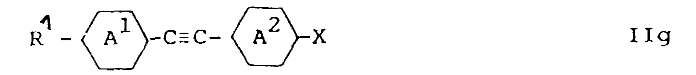 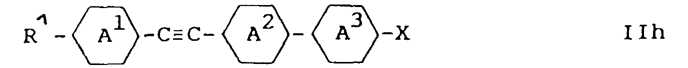 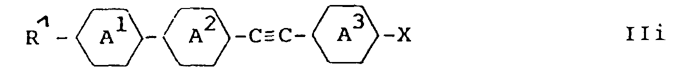 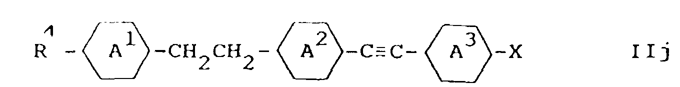 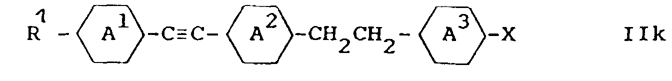 worin R n-Alkyl oder n-Alkenyl mit bis zu 9 C-Atomen,
   X, F, Cl, -CF₃, -CHF₂, -OCF₃, -OCHF₂, -OCF₂CF₂H oder -OC₂F₅, und
   die Ringe A¹, A² und A³ jeweils unabhängig voneinander 1,4-Phenylen, 2- oder 3-Fluor-1,4-phenylen oder trans-1,4-Cyclohexylen, oder einer der Ringe A¹, A² und A³ auch 1,4-Cyclohexenylen, 2,3-Difluor-1,4-phenylen, Pyridin-2,5-diyl oder Pyrimidin-2,5-diyl bedeuten,
b) 0-40 Gew.% einer flüssigkristallinen Komponente B, bestehend aus einer oder mehreren Verbindungen mit einer dielektrischen Anisotropie von -1,5 bis +1,5 der allgemeinen Formel I, enthält 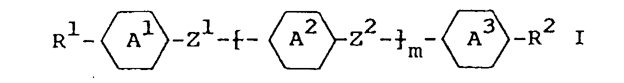 worin R¹ und R² jeweils unabhängig voneinander n-Alkyl, n-Alkoxy, n-Oxaalkyl, ω-Fluoralkyl oder n-Alkenyl mit bis zu 9 C-Atomen, die Ringe A¹, A² und A³ jeweils unabhängig voneinander 1,4-Phenylen, 2-oder 3-Fluor-1,4-phenylen, trans-1,4-Cyclohexylen oder 1,4-Cyclohexenylen,
   Z¹ und Z² jeweils unabhängig voneinander -CH₂CH₂-, -C≡C- oder eine Einfachbindung, und
   m 0, 1 oder 2 bedeutet,
c) 0-20 Gew.% einer flüssigkristallinen Komponente C, bestehend aus einer oder mehreren Verbindungen mit einer dielektrischen Anisotropie von unter -1,5, enthält und
d) eine optisch aktive Komponente D in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,7 und insbesondere etwa 0,2 - 1,3 beträgt
die nematische Flüssigkristallmischung einen nematischen Phasenbereich von mindestens 60 °C, eine Viskosität von nicht mehr als 35 mPa.s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20 °C bezogen sind.

Gegenstand der Erfindung ist somit ein SFA mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 100 und 600°, dadurch gekennzeichnet, daß die nematische Flüssigkristallmischung
   a) auf Komponente A, enthaltend eine oder mehrere Verbindunge, ausgewählt aus der Gruppe A, bestehend aus Verbindungen der Formeln IIa - IIc und IIe - IIk, basiert: 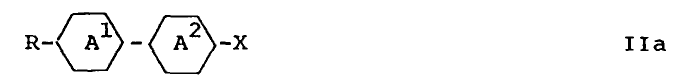 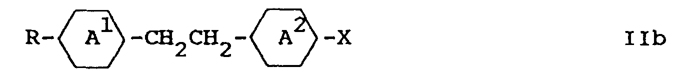 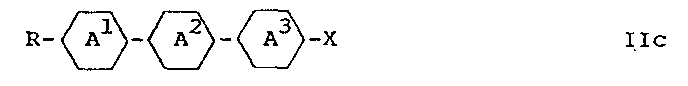 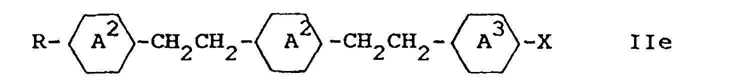 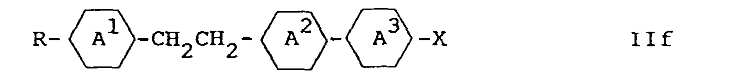 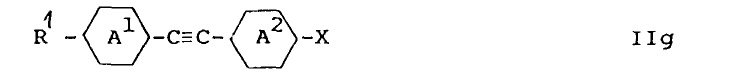 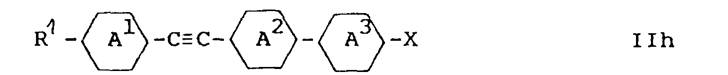 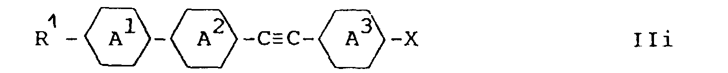 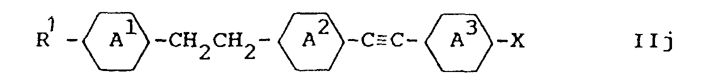 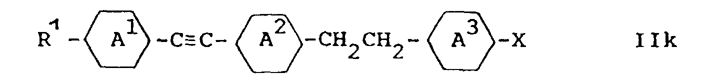 worin R n-Alkyl oder n-Alkenyl mit bis zu 9 C-Atomen,
      X F, Cl, -CF₃, -CHF₂, -OCF₃, -OCHF₂, -OCF₂CF₂H oder -OC₂F₅, und
      die Ringe A¹, A² und A³ jeweils unabhängig voneinander 1,4-Phenylen, 2- oder 3-Fluor-1,4-phenylen oder trans-1,4-Cyclohexylen oder einer der Ringe A¹, A² und A³ auch 1,4-Cyclohexenylen, 2,3-Difluor-1,4-phenylen, Pyridin-2,5-diyl oder Pyrimidin-2,5-diyl bedeuten,
   b) 0-40 Gew.% einer flüssigkristallinen Komponente B bestehend aus einer oder mehreren Verbindungen mit einer dielektrischen Anisotropie von -1,5 bis +1,5 der allgemeinen Formel I, enthält 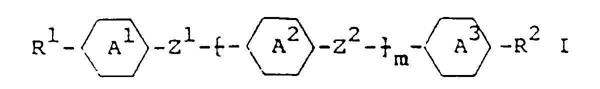 worin R¹ und R² jeweils unabhängig voneinander n-Alkyl, n-Alkoxy, n-Oxaalkyl, ω-Fluoralkyl oder n-Alkenyl mit bis zu 9 C-Atomen, die Ringe A¹, A² und A³ jeweils unabhängig voneinander 1,4-Phenylen, 2- oder 3-Fluor-1,4-phenylen, trans-1,4-Cyclohexylen oder 1,4-Cyclohexenylen,
      Z¹ und Z² jeweils unabhängig voneinander -CH₂CH₂-, -C≡C- oder eine Einfachbindung, und
      m 0, 1 oder 2 bedeutet,
   c) 0-20 Gew.% einer flüssigkristallinen Komponente C, bestehend aus einer oder mehreren Verbindungen mit einer dielektrischen Anisotropie von unter -1,5, enthält und
   d) eine optisch aktive Komponente D in einer Menge, daß das Verhältnis zwischen Schichtdicke (Abstand der planparallelen Trägerplatten) und natürlicher Ganghöhe der chiralen nematischen Flüssigkristallmischung etwa 0,2 bis 1,7 und insbesondere 0,2 bis 1,3 beträgt, enthält und
      daß die nematische Flüssigkristallmischung einen nematischen Phasenbereich von mindestens 60 ° C, eine Viskosität von nicht mehr als 35 mPa.s und eine dielektrische Anisotropie von mindestens + 1 aufweist, wobei die dielektrischen Anisotropien der Verbindungen und die auf die nematische Flüssigkristallmischung bezogenen Parameter auf eine Temperatur von 20 °C bezogen sind und daß Komponente A Verbindungen der Formeln IIa bis IIc und IIe bis IIf, worin X Cyan bedeutet, und Verbindungen der Formel IIa bis IIc und IIe bis IIf, worin X -NCS, F, Cl, -CF₃, -CHF₂, -OCF₃, -OCHF₂, -OCF₂CF₂H oder -OC₂F₅ bedeutet, enthält und der Anteil der Cyanverbindungen in Komponente A 0 bis 50 Gew.% beträgt.

Gegenstand der Erfindung sind auch Flüssigkristallmischungen der bei der Definition der erfindungsgemäßen SFA gegebenen Zusammensetzung, dadurch gekennzeichnet, daß diese eine hohe dielektrische Anisotropie Δε> 5 und einen hohen Anteil an Cyanverbindungen von mehr als 20 Gew.% und weniger als 50 Gew.% aufweisen.

Die einzelnen Verbindungen z.B. der Formeln I und IIa bis IIk oder auch andere Verbindungen, die in den erfindungsgemäßen SFA verwendet werden können, sind entweder bekannt, oder sie können analog zu den bekannten Verbindungen hergestellt werden.

Bevorzugte Flüssigkristallmischungen enthalten
a) mindestens eine Komponente. ausgewählt aus der Gruppe B4, bestehend aus Verbindungen der Formeln AI bis AVI: 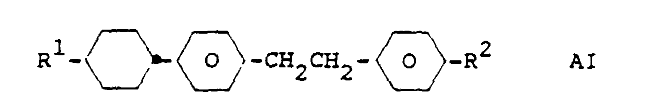 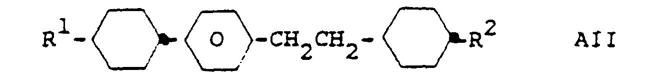 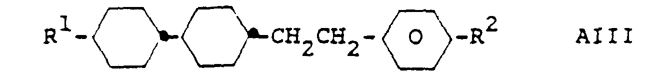 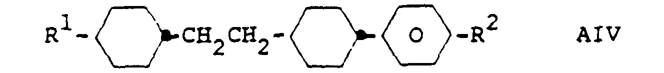 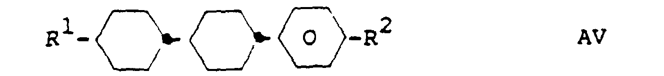 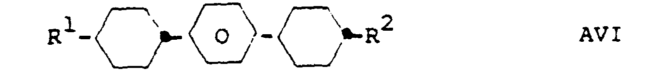 worin R¹ und R² jeweils unabhängig voneinander jeweils R bedeuten und
   R Alkyl mit 1-12 C-Atomen ist, worin auch eine oder zwei nicht benachbarte CH₂-Gruppen durch -O-, -CH = CH-, -CO-, -O-CO- oder -CO-O- ersetzt sein können,
b) und/oder mindestens eine Komponente, ausgewählt aus der Gruppe B1, bestehend aus den Verbindungen der Formeln BI bis BIV: 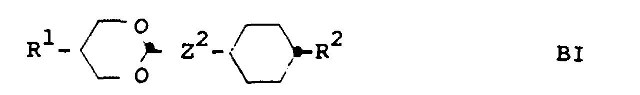 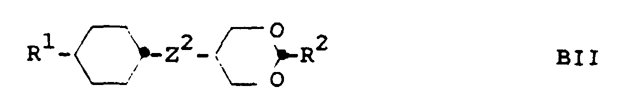 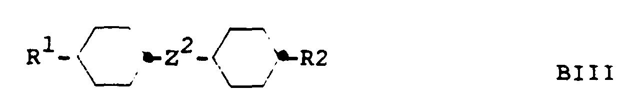 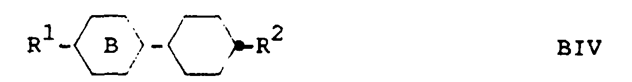 worin R¹ und R² jeweils unabhängig voneinander die für R angegebene Bedeutung haben, Z² -CH₂CH₂-, -CO-O-, -O-CO- oder eine Einfachbindung, und 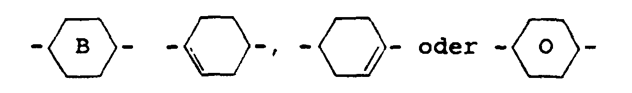 bedeutet,
   und/oder mindestens eine Komponente, ausgewählt aus der Gruppe B2, bestehend aus den Verbindungen der Formeln BV bis BVII: 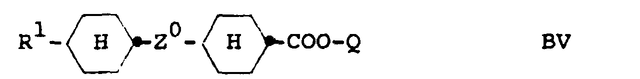 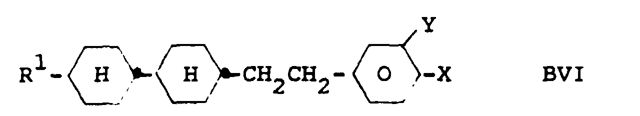 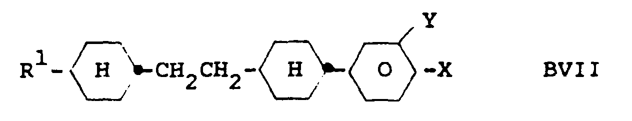 worin R¹ die für R angegebene Bedeutung hat,
   Z⁰ -CH₂CH₂- oder eine Einfachbindung ist und
   Q 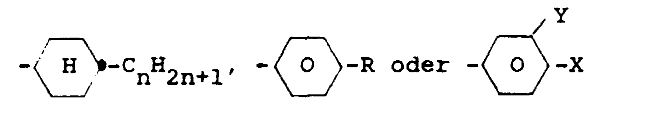 bedeutet,
   wobei n 1 bis 9 ist, X bedeutet CN oder F und Y ist H oder F,
   und/oder mindestens eine Komponente, ausgewählt aus der Gruppe B3, bestehend aus den Verbindungen der Formeln BVIII und BIX: 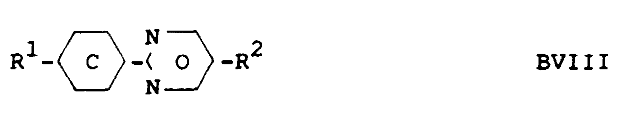 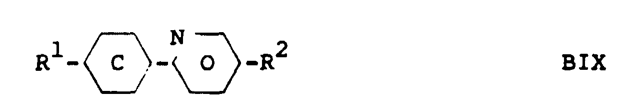 worin R¹ und R² jeweils unabhängig voneinander die für R angegebene Bedeutung haben, und 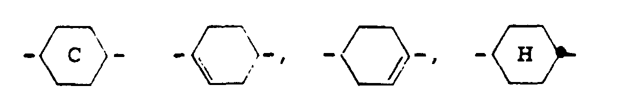 oder 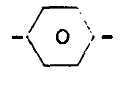 bedeutet

Besonders bevorzugte Verbindungen der Formel BIII sind diejenigen der folgenden Teilformeln: 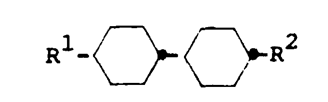 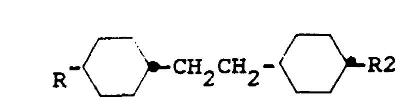 worin
- R¹: CH₃-(CH₂)ₙ-O-, CH₃-(CH₂)ₜ-, trans-H-(CH₂)ᵣ-CH = CH-(CH₂CH₂)ₛ-CH₂O- oder trans-H-(CH₂)ᵣ)-CH = CH-(CH₂CH₂)ₛ-,
- R²: CH₃-(CH₂)ₜ-
- n: 1, 2, 3 oder 4
- r: 0, 1, 2 oder 3
- s: 0 oder 1, und
- t: 1, 2, 3 oder 4 ist.

Ferner bevorzugt sind diejenigen der Teilformel 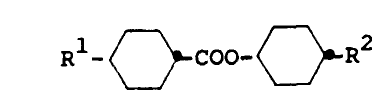 worin R¹ und R² die oben angegebene Bedeutung haben.

Der Anteil der Verbindungen der Formel BIII der oben angegebenen Teilformeln ist vorzugsweise ca. 5 % bis 45 %, insbesondere bevorzugt ca. 10 % bis 35 %. Besonders bevorzugte Verbindungen der Formel BIV sind diejenigen der folgenden Teilformel: 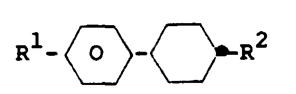 worin
- R¹: CH₃-(CH₂)ₙ-O- oder trans-H-(CH₂)ᵣ-CH = CH-(CH₂CH₂)ₛ-CH₂O- und R² CH₃-(CH₂)ₜ- ist, wobei
- n: 1, 2, 3 oder 4,
- r: 0, 1, 2 oder 3,
- s: 0 oder 1, und
- t: 1, 2, 3 oder 4 ist.

Der Anteil dieser Verbindungen, bzw. der Verbindungen der Formel BIV, ist vorzugsweise ca. 5 % bis 40 %, insbesondere bevorzugt ca. 10 % bis 35 %.

Vorzugsweise enthalten die Mischungen Verbindungen der Formel III, insbesondere solche der Teilformel 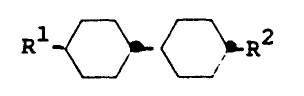 In einer besonders bevorzugten Ausführungsform enthalten die Mischungen gleichzeitig Verbindungen der Formeln BIII und BIV, wobei der Gesamtanteil für Komponenten der Gruppe 81 gewahrt bleibt.

Falls Verbindungen der Formeln BI und/oder BIII vorhanden sind, bedeuten R¹ und R² vorzugsweise jeweils unabhängig voneinander n-Alkyl mit 1 bis 7 C-Atomen oder (trans)-n-Alkenyl mit 3 bis 7 C-Atomen. Z² ist vorzugsweise eine Einfachbindung. BI ist besonders bevorzugt.

Ferner bevorzugt sind erfindungsgemäße Mischungen, die einer oder mehrere Verbindungen der Formel BIV enthalten, worin 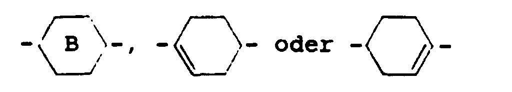 bedeutet und R¹ und R² eine der oben angegebenen bevorzugten Bedeutungen haben, insbesondere bevorzugt n-Alkyl mit 1 bis 7 C-Atomen bedeuten.

In jedem Fall bleibt der Gesamtanteil für Komponenten der Gruppe B1 gewahrt.

Der Anteil der Verbindungen der Gruppe B2 beträgt vorzugsweise ca. 5 % bis 45 %, insbesondere bevorzugt 5 % bis 20 %. Der Anteil (bevorzugte Bereiche) für BV bis BVII ist wie folgt:
BV ca. 5 % bis 30 %, vorzugsweise ca. 5 % bsi 15 %
Summe BVI und BVII: ca. 5 % bis 25 %, vorzugsweise ca. 10 % bis 20 %.

Bevorzugte Verbindungen der Gruppe B2 sind im folgenden angegeben: 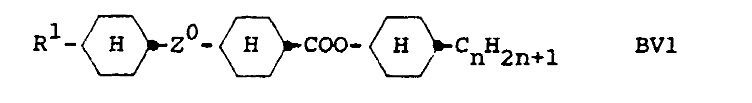 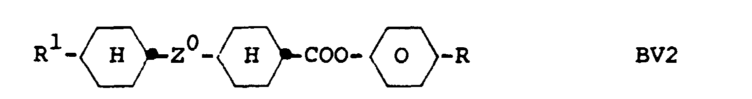 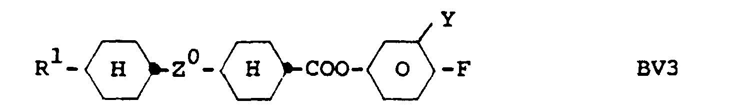 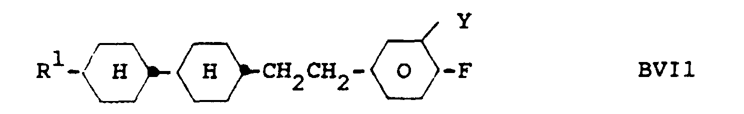 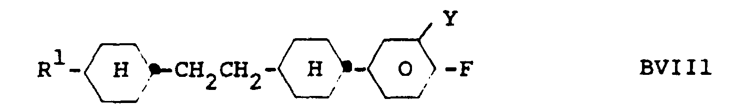 R¹ ist vorzugsweise n-Alkyl mit 1 bis 7 C-Atomen oder (Trans)-n-Alkenyl mit 3 bis 7 C-Atomen. Z⁰ ist vorzugsweise eine Einfachbindung. R hat vorzugsweise die oben für R¹ angegebene bevorzugte Bedeutung oder bedeutet Fluor. Y ist vorzugsweise Fluor.

Vorzugsweise enthalten die erfindungsgemäßen Mischungen eine oder mehrere Verbindungen ausgewählt aus der Gruppe bestehend aus BV3, BVI1 und BVII1 in einem Gesamtanteil von ca. 5 bis 35 %.

In einer besonders bevorzugten Ausführungsform enthalten die erfindungsgemäßen Mischungen neben BV3, BVI1, BVII1 und BV2 (R = A) weitere terminal fluorierte Verbindungen zum Beispiel ausgewählt aus der Gruppe bestehend aus: 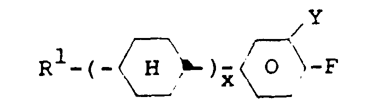 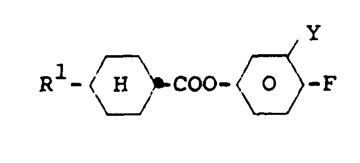 und/oder polare Heterocyclen ausgewählt aus der Gruppe bestehend aus 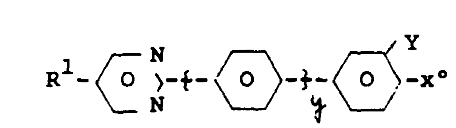 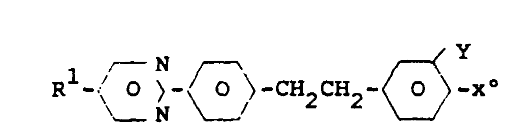 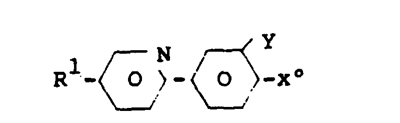 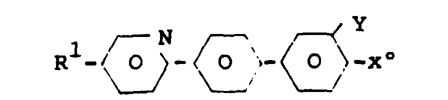 worin R¹ vorzugsweise n-Alkyl mit 1 bis 7 C-Atomen oder (trans)-n-Alkenyl mit 3 bis 7 C-Atomen, x 1 oder 2, x° F, Cl, CF₃, -OCF₃ oder -OCHF₂, y 0 oder 1 und Y H oder F bedeutet
Der Gesamtanteil aller terminal fluorierter Verbindungen beträgt vorzugsweise ca. 5 % bis 65 %, insbesondere ca. 15 % bis 40 %..

Der Anteil der Verbindungen aus Gruppe B3 beträgt vorzugsweise ca. 5 % bis 30 %, insbesondere bevorzugt ca. 10 % bis 20 %. R¹ ist vorzugsweise n-Alkyl oder n-Alkoxy mit jeweils 1 bis 9 C-Atomen. R² ist vorzugsweise n-Alkyl mit 1 bis 9 C-Atomen. Es können jedoch auch analoge Verbindungen mit Alkenyl- bzw. Alkenyloxy-Gruppen eingesetzt werden. Verbindungen der Formel BVIII sind bevorzugt 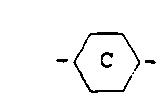 ist vorzugsweise 1,4-Phenylen.

Die erfindungsgemäßen Mischungen enthalten Verbindungen aus mindestens einer der Gruppen B1, B2 und B3. Vorzugsweise enthalten sie eine oder mehrere Verbindungen aus Gruppe B1 und eine oder mehrere Verbindungen aus Gruppe B2 und/oder 83.

Ferner bevorzugt sind Isothiocyanate, z.B. der Formel 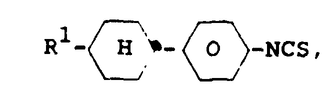 worin R¹ n-Alkyl mit 1 bis 7 C-Atomen oder n-Alkenyl mit 3 bis 7 C-Atomen bedeutet.

In einer besonders bevorzugten Ausführungsform enthalten die erfindungsgemäßen Mischungen vorzugsweise ca. 5 % bis 20 % einer oder mehrerer Verbindungen mit einer dielektrischen Anisotropie von unter -1,5 (Komponente D). Derartige Verbindungen sind bekannt, z.B. Derivate der 2,3-Dicyanhydrochinon oder Cyclohexanderivate mit den Strukturelement 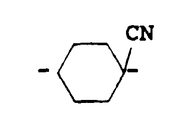 gemäß DE-OS 32 31 707 bzw. DE-OS 34 07 013.

Vorzugsweise werden jedoch Verbindungen mit dem Strukturelement 2,3-Difluor-1,4-phenylen gewählt, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCE/DE 88/00133, insbesondere solche der Formeln 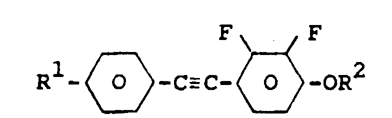 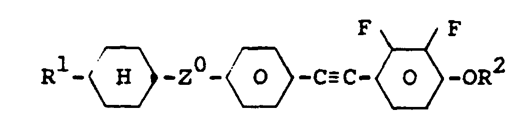 worin R¹ und R² jeweils unabhängig voneinander vorzugsweise n-Alkyl mit 1 bis 7 C-Atomen oder n-Alkenyl mit 3 bis 7 C-Atomen bedeuten und Z⁰ -CH₂CH₂- oder eine Einfachbindung ist, und Phenylpyrimidin der Formel 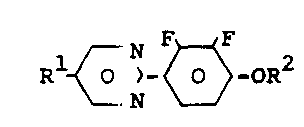 entsprechend DE-OS 38 07 871.

In einer besonders bevorzugten Ausführungsform enthalten die Mischungen ca. 5 % bis 35 %, insbesondere bevorzugt ca. 10 % bis 20 % an flüssigkristalline Tolan-Verbindungen. Hierdurch kann bei geringeren Schichtdicken (ca. 5-6 µm) gearbeitet werden, wodurch die Schaltzeiten deutlich kürzer werden. Besonders bevorzugte Tolane sind im folgenden angegeben: 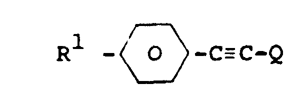 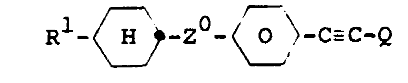
- R¹: ist vorzugsweise n-Alkyl oder n-Alkoxy mit 1 bis 7 C-Atomen,
- Z⁰: ist -CH₂CH₂- oder eine Einfachbindung,
- Q: ist 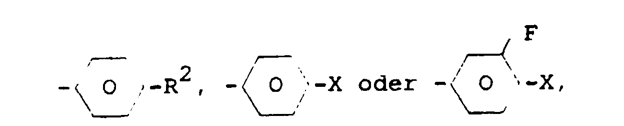 wobei
- X: ist F, Cl oder OCF₃, wobei
- R²: n-Alkyl oder n-Alkoxy mit jeweils 1 bis 7 C-Atomen oder n-Alkenyl oder n-Alkenyloxy mit jeweils 3 bis 7 C-Atomen bedeutet.

Im folgenden weitere besonders bevorzugten Ausführungsformen:
- Komponente A enthält Verbindungen der Formeln IIa bis IIf, worin X Cyan bedeutet, und Verbindungen der Formeln IIa bis IIf, worin X -NCS, F, Cl, -CF₃, -CHF₂, -OCF₃, -OCHF₂, -OCF₂CF₂H oder -OC₂F₅ bedeutet, und der Anteil der Cyanverbindungen in Komponente A beträgt 0 bis 50 Gew.%,
- Komponente A enthält eine oder mehrere Verbindungen der Formeln IIa1-IIa3 und IIc1-IIc8 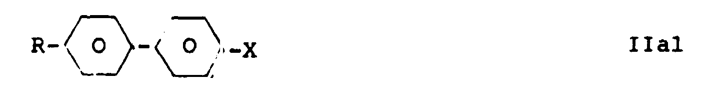 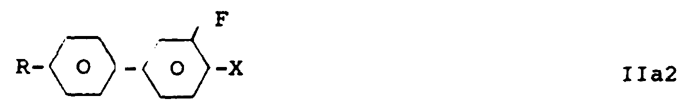 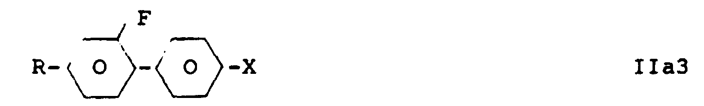 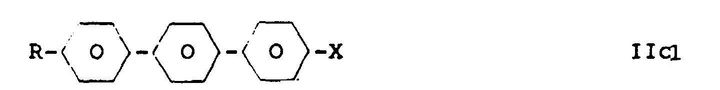 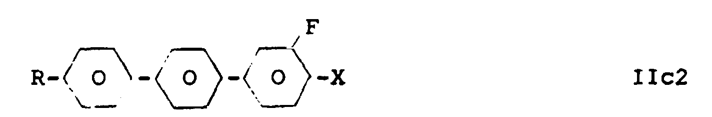 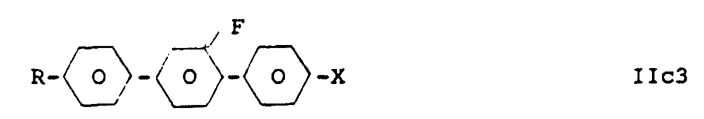 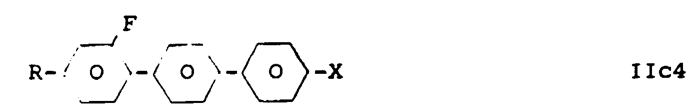 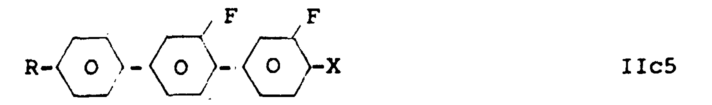 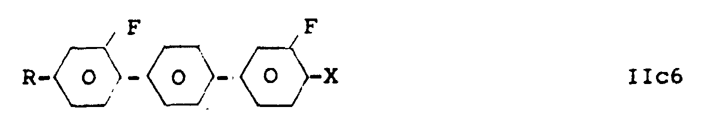 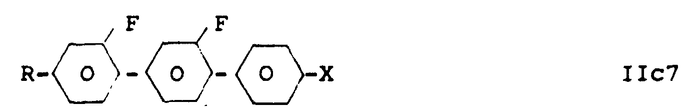 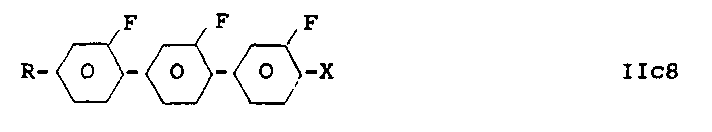 worin R n-Alkyl, n-Alkoxy oder n-Alkenyl mit 1-9 C-Atomen und X F, Cl oder OCF₃ bedeutet.
- Komponente A enthält mindestens eine Verbindung der Formeln IId1-IId5 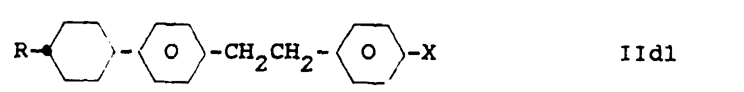 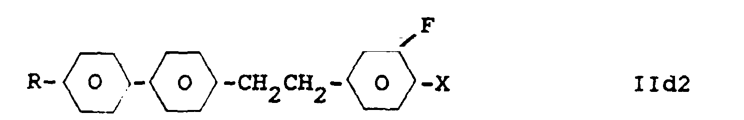 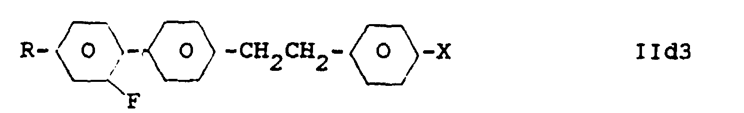 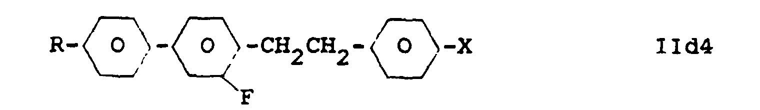 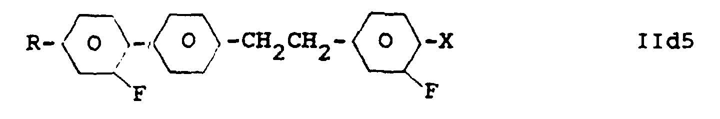 worin R CₙH₂ₙ₊₁ oder 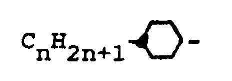 mit n = 1-10 ist und X F, Cl oder OCF₃ und ganz besonders F ist.
- Komponente A enthält keine Verbindungen der Formeln IIa bis IIf, worin X Cyan bedeutet,
- Komponente A enthält eine oder mehrere Verbindungen der Formel 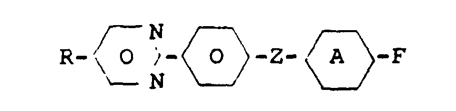 worin
   R n-Alkyl, n-Alkoxy oder n-Alkenyl mit 1-9 C-Atomen,
   Z -CH₂CH₂- oder eine Einfachbindung, und 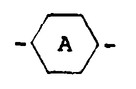 1,4-Phenylen, 2- oder 3-Fluor-1,4-phenylen oder 1,4-Cyclohexylen bedeutet.
- X bedeutet F, Cl, CF₃, -OCF₃, OCHF₂ oder CHF₂,
- Komponente B enthält eine oder mehrere Verbindungen ausgewählt aus der Gruppe bestehend aus II1 bis II7: 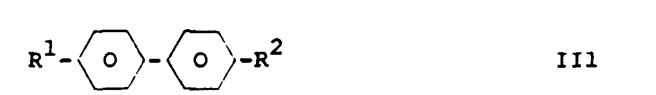 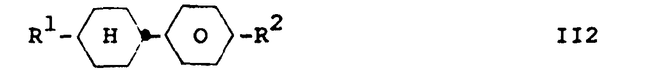 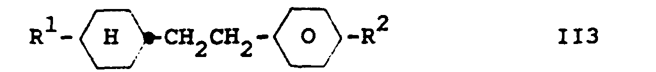 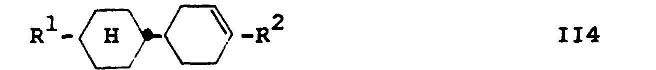 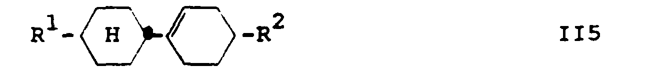 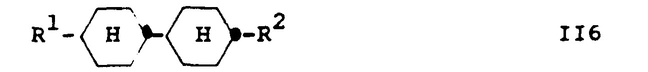 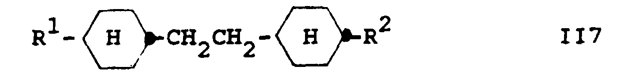 worin R¹ und R² die in Anspruch 1 angegebene Bedeutung haben.
- Komponente B enthält zusätzlich eine oder mehrere Verbindungen ausgewählt aus der Gruppe bestehend aus II8 bis II20: 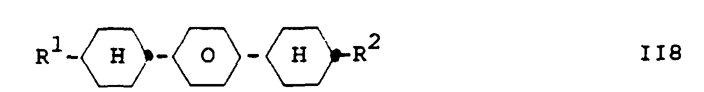 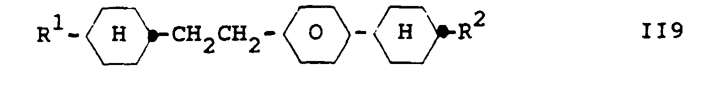 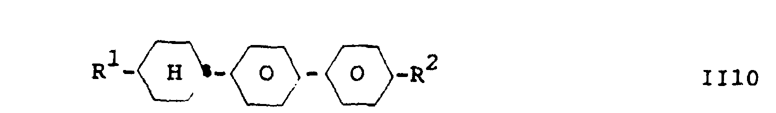 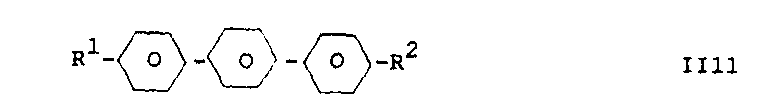 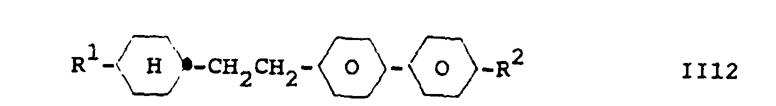 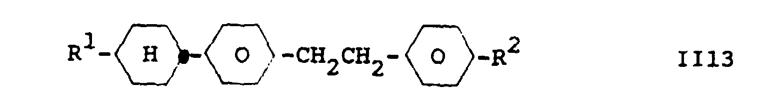 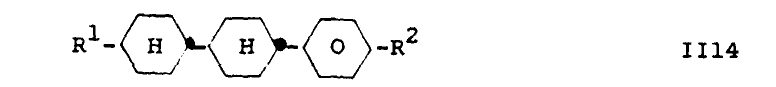 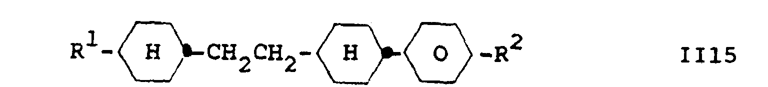 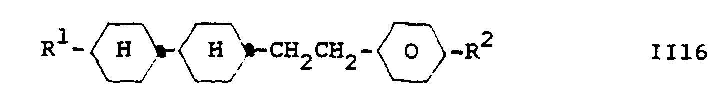 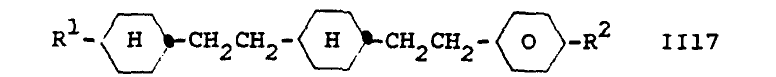 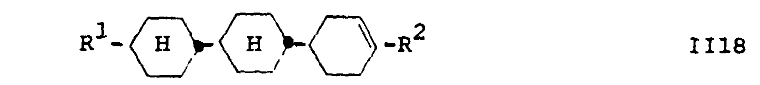 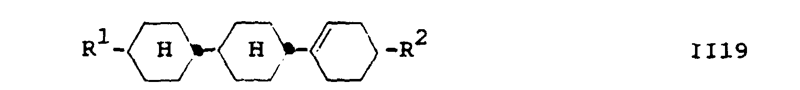 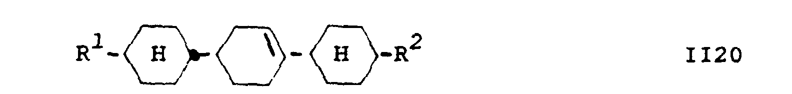 worin R¹ und R² die in Anspruch 1 angegebene Bedeutung haben und die 1,4-Phenylengruppen in II8 bis II17 jeweils unabhängig voneinander auch durch Fluor ein- oder mehrfach substituiert sein können.
- Komponente B enthält zusätzlich eine oder mehrere Verbindungen ausgewählt aus der Gruppe bestehend aus II21 bis II25: 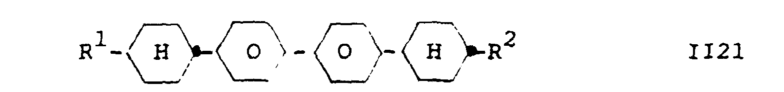 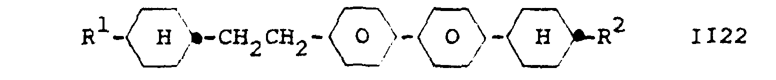 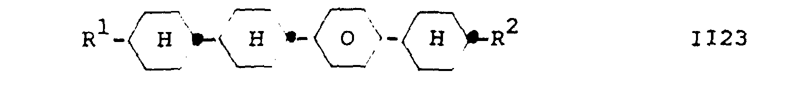 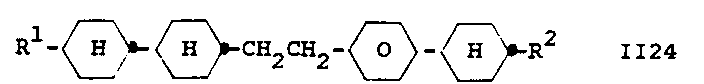 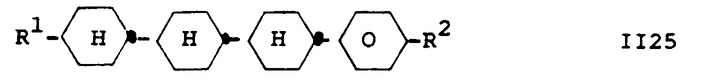 worin R¹ und R² die in Anspruch 1 angegebene Bedeutung haben und die 1,4-Phenylengruppen in II21 bis II25 jeweils unabhängig voneinander auch durch Fluor ein- oder mehrfach substituiert sein können.
- Komponente B enthält eine oder mehrere Verbindungen ausgewählt aus der Gruppe bestehend aus II26 und II27: 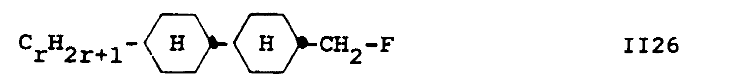 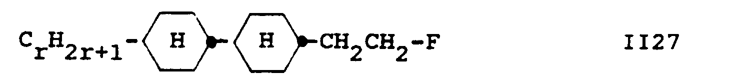 worin CᵣH₂ᵣ₊₁ eine geradkettige Alkylgruppe mit bis zu 7 C-Atomen ist.
- die Flüssigkristallmischung enthält neben den Komponenten A, B und C zusätzlich eine oder mehrere Verbindungen ausgewählt aus der Gruppe bestehend aus III und IV: 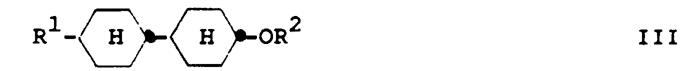 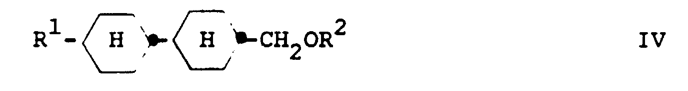 worin R¹ und R² die in Anspruch 1 angegebene Bedeutung haben.
- die Flüssigkristallmischung enthält neben den Komponenten A, B und C zusätzlich eine oder mehrere Verbindungen ausgewählt aus der Gruppe bestehend aus V und VI: 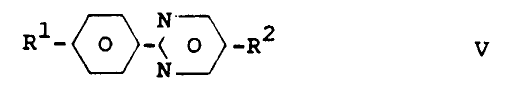 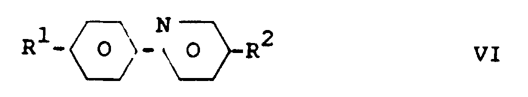 worin R¹ und R² die in Anspruch 1 angegebene Bedeutung haben.
- die Komponente C enthält eine oder mehrere Verbindungen ausgewählt aus der Gruppe bestehend aus VII bis XI: 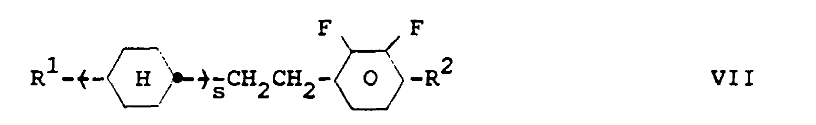 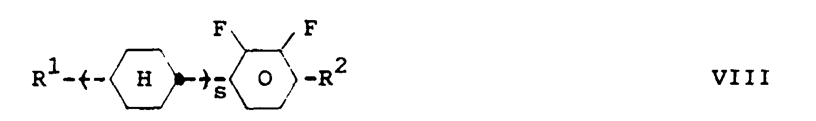 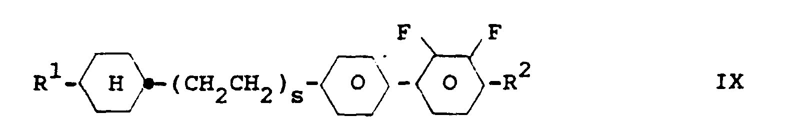 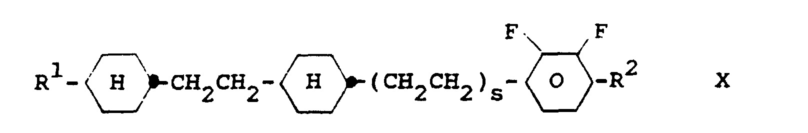 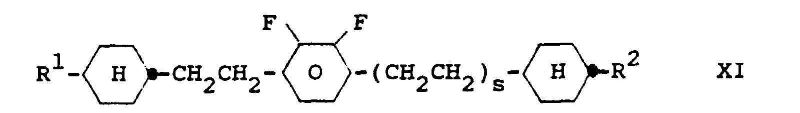 worin R¹ und R² die in Anspruch 1 angegebene Bedeutung haben und S 0 oder 1 ist.
- die Komponente B enthält eine oder mehrere Verbindungen ausgewählt aus der Gruppe bestehend aus XII bis XIV: 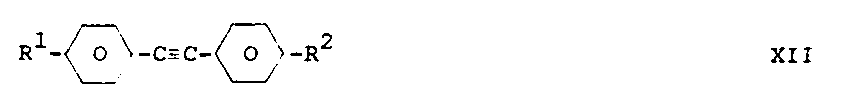 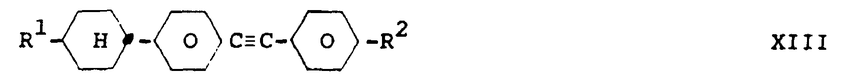 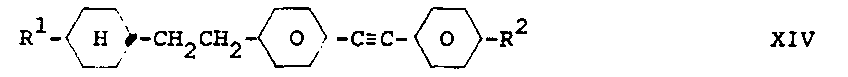 worin R¹ und R² die in Anspruch 1 angegebene Bedeutung haben.

Bevorzugt sind Mischungen, welche ausschließlich Verbindungen der Formeln IIa bis IIh (Gruppe A) und Komponente C enthalten, d.h. keine Verbindungen der Komponente B.

Die bevorzugten Mischungen enthaltend terminal halogenisierte Verbindungen der Formeln IIa bis IIk (X = F, Cl, -CF₃, -CHF₂, -OCF₃ oder -OCHF₂) weist besonders günstige Parameterkombinationen und gleichzeitig ein breites d/p-Fenster auf.

Erfindungsgemäße Flüssigkristallmischungen, deren Komponente A mindestens eine Verbindung der Formel 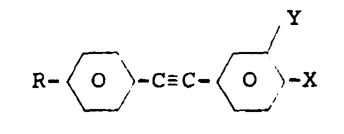 worin
- R: -CₙH₂ₙ₊₁, -OCₙH₂ₙ₊₁, 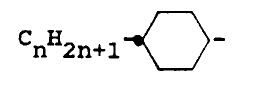 oder 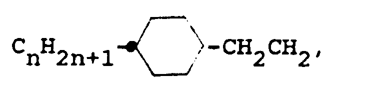
- n: eine ganze Zahl von 1-15,
- Y: H oder F und
- X: F, Cl oder OCF₃
bedeuten,
und/oder eine Verbindung der Formeln IId2-IId5, IIa1-IIa3 und/oder IIc1-IIc8 enthalten, weisen günstige Werte für die Schwellenspannung V_{10/0/20} und die Fließviskosität η auf und sind durch relativ hohe oder hohe Werte für die. optische Anisotropie gekennzeichnet. Diese Mischungen sind bevorzugt.

Für die Komponente D stehen dem Fachmann eine Vielzahl, zum Teil kommerziell erhältlicher chiraler Dotierstoffe zur Verfügung. Deren Wahl ist an sich nicht kritisch.

Die in den erfindungsgemäßen SFA's verwendeten Flüssigkristallmischungen sind dielektrisch positiv mit Δε ≧ 1. Besonders bevorzugt sind Flüssigkristallmischungen mit Δε ≧ 3 und ganz besonders solche mit Δε ≧ 5.

Die erfindungsgemäßen Flüssigkristallmischungen weisen günstige Werte für die Schwellenspannung V_{10/0/20} und für die Fließviskosität η auf. Ist der Wert für den optischen Wegunterschied d·Δn vorgegeben, wird der Wert für die Schichtdicke d durch die optische Anisotropie Δn bestimmt. Insbesondere bei relativ hohen oder hohen Werten für dΔn ist i.a. die Verwendung erfindungsgemäßer Flüssigkristallmischungen mit einem relativ hohen bzw. hohen Wert für die optische Anisotropie bevorzugt, da dann der Wert für d relativ klein gewählt werden kann, was zu günstigeren Werten für die Schaltzeiten führt. Aber auch solche erfindungsgemäßen Flüssigkristallanzeigen, die erfindungsgemäße Flüssigkristallmischungen mit kleineren Werten für Δn enthalten, sind durch vorteilhafte Werte für die Schaltzeiten gekennzeichnet. Die erfindungsgemäßen Flüssigkristallmischungen sind weiter durch vorteilhafte Werte für die Steilheit der elektrooptischen Kennlinie gekennzeichnet und können mit hohen Multiplexraten betrieben werden. Darüberhinaus weisen die erfindungsgemäßen Flüssigkristallmischungen eine hohe Stabilität und günstige Werte für den elektrischen Widerstand und die Frequenzabhängigkeit der Schwellenspannung auf. Die erfindungsgemäßen Flüssigkristallanzeigen weisen einen großen Arbeitstemperaturbereich und eine gute Winkelabhängigkeit des Kontrastes auf.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 360° gegeneinander verdreht ist, entspricht der für derartige Anzeigeelemente üblichen Bauweise. Dabei ist der Begriff der üblichen Bauweise hier weit gefaßt und umfaßt auch alle Abwandlungen und Modifikationen der Supertwistzelle, insbesondere auch Matrix-Anzeigeelemente sowie die zusätzliche Magnete enthaltenden Anzeigeelemente nach der DE-OS 2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallkomponenten der Flüssigkristallschicht.

Die Herstellung der erfindungsgemäß verwendbaren Flüssigkristallmischungen erfolgt in an sich üblicher Weise.

In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Die folgenden Beispiele sollen die Erfindung erläutern. ohne sie zu begrenzen.

Es bedeutet:

| | |
|---|---|
| S-N | Phasenübergangs-Temperatur smektisch-nematisch, |
| Klp. | Klärpunkt. |
| Visk. | Viskosität (m Pa.s), |
| Tₒₙ | Zeit vom Einschalten bis zur Erreichung von 90 % des maximalen Kontrastes |
| T_{off} | Zeit vom Ausschalten bis zur Erreichung von 10 % des maximalen Kontrastes |

Dis SFA wird im Multiplexbetrieb angesteuert (Multiplexverhältnis 1:100, Bias 1:11, Betriebsspannung 18,5 Volt). Vor und nachstehend sind alle Temperaturen in °C angegeben. Die Prozentzahlen sind Gewichtsprozente. Die Werte für die Schaltzeiten und Viskositäten beziehen sich auf 20 °C.

### Beispiel 1

Ein SFA vom Typ STN enthaltend eine Flüssigkristallmischung mit folgenden Parametern:

| Klärpunkt | 106 ° |
|---|---|
| Δn | 0,1322 |
| Δε | +6,9 |

und bestehend aus einer Basismischung aus
18 % p-trans-4-Propylcyclohexan-benzonitril,
8 % trans-1-p-Methoxyphenyl-4-propylcyclohexan,
9 % p-[trans-4-(trans-4-Propylcyclohexyl)-cyclohexyl]-trifluormethoxybenzol,
8 % p-[trans-4-(trans-4-Pentylcyclohexyl)-cyclohexyl]-trifluormethoxybenzol,
8 % 1-[trans-4-(trans-4-Propylcyclohexyl)-cyclohexyl]-2-(p-trifluormethoxyphenyl)-ethan,
7 % 1-[trans-4-(trans-4-Pentylcyclohexyl)-cyclohexyl]-2-(p-trifluormethoxyphenyl)-ethan,
7 % 1-[trans-4-(trans-4-Propylcyclohexyl)-cyclohexyl]-2-(3,4-difluorphenyl)-ethan,
6 % 1-[trans-4-(trans-4-Propylcyclohexyl)-cyclohexyl]-2-(p-fluorphenyl)-ethan,
7 % 1-[trans-4-(trans-4-Propylcyclohexyl)-cyclohexyl]-2-(p-trifluormethylphenyl)-ethan,
7 % 4-Trifluormethoxy-4'-(trans-4-propylcyclohexyl)-biphenyl,
2 % 4-(trans-4-Propylcyclohexyl)-4'-methoxytolan,

2 % 4-(trans-4-Propylcyclohexyl)-4'-ethoxytolan,
3 % 4-(trans-4-Propylcyclohexyl)-4'-propoxytolan,
4 % 4-Methyl-4'-ethoxytolan und
4 % 4-Ethyl-4'-methoxytolan
und einer chiralen Komponente (p-(p-n-Hexylbenzoyloxy)benzoesäure-2-octylester) zeigt kurze Schaltzeiten.

### Beispiel 2

Ein SFA vom Typ STN mit folgenden Parametern:

| | |
|---|---|
| Verdrillungswinkel | 240 ° |
| Anstellwinkel | 5 ° |
| d/p | 0,56 |
| d.Δn | 0,85 |

enthaltend eine Flüssigkristallmischung mit folgenden Parametern:

| | |
|---|---|
| Klärpunkt | 87 ° |
| Δn | 0,1222 |
| Δε | +8,5 |
| Viskosität (20°C) | 16 mPa.s |

und bestehend aus einer Basismischung aus
18 % p-trans-4-Propylcyclohexan-benzonitril,
8 % trans-1-p-Methoxyphenyl-4-propylcyclohexan,
5 % 2-p-Fluorphenyl-5-propylpyrimidin,
5 % 2-p-Trifluormethoxyphenyl-5-pentylpyrimidin,
5 % 2-p-Trifluormethoxyphenyl-5-heptylpyrimidin,
9 % p-[trans-4-(trans-4-Propylcyclohexyl)-cyclohexyl]-trifluormethoxybenzol,
8 % p-[trans-4-(trans-4-Pentylcyclohexyl)-cyclohexyl]-trifluormethoxybenzol,
8 % 1-[trans-4-(trans-4-Propylcyclohexyl)-cyclohexyl]-2-(p-trifluormethoxyphenyl)-ethan,
7 % 1-[trans-4-(trans-4-Pentylcyclohexyl)-cyclohexyl]-2-(p-trifluormethoxyphenyl)-ethan,
5 % 1-[trans-4-(trans-4-Propylcyclohexyl)-cyclohexyl]-2-(3,4-difluorphenyl)-ethan,
5 % 1-[trans-4-(trans-4-Propylcyclohexyl)-cyclohexyl]-2-(p-fluorphenyl)-ethan,
7 % 4-Trifluormethoxy-4'-(trans-4-propylcyclohexyl)-biphenyl,
5 % 4-(trans-4-Propylcyclohexyl)-2',3'-difluor-4'-ethoxytolan und
5 % 4-(trans-4-Pentylcyclohexyl)-2',3'-difluor-4'-ethoxytolan
und einer chiralen Komponente (p-(p-n-Hexylbenzoyloxy)benzoesäure-2-octylester) zeigt folgende Schaltzeiten: 114 ms (1/16 D, 1/5 b), 236 ms (1/240 D, 1/14,5 b), V_{10/0/20} 2,35 Volt, V_{90/0/20} 2,53 Volt und ein Δ d/P (d/P window) von 0,20.

### Beispiel 3

Ein SFA vom Typ STN enthaltend eine Flüssigkristallmischung mit folgenden Parametern:

| | |
|---|---|
| Klärpunkt | 106 ° |
| Δn | 0,1322 |
| Δε | +6,9 |

und bestehend aus einer Basismischung aus
18 % p-trans-4-Propylcyclohexan-benzonitril,
8 % trans-1--p-Methoxyphenyl-4-propylcyclohexan,
9 % p-[trans-4-(trans-4-Propylcyclohexyl)-cyclohexyl]-trifluormethoxybenzol,
8 % p-[trans-4-(trans-4-Pentylcyclohexyl)-cyclohexyl]-trifluormethoxybenzol,
8 % 1-[trans-4-(trans-4-Propylcyclohexyl)-cyclohexyl]-2-(p-trifluormethoxyphenyl)-ethan,
7 % 1-[trans-4-(trans-4-Pentylcyclohexyl)-cyclohexyl]-2-(p-trifluormethoxyphenyl)-ethan,
7 % 1-[trans-4-(trans-4-Propylcyclohexyl)-cyclohexyl]-2-(3,4-difluorphenyl)-ethan,
6 % 1-[trans-4-(trans-4-Propylcyclohexyl)-cyclohexyl]-2-(p-fluorphenyl)-ethan,
7 % 1-[trans-4-(trans-4-Propylcyclohexyl)-cyclohexyl]-2-(p-trifluormethylphenyl)-ethan,
7 % 4-Trifluormethoxy-4'-(trans-4-propylcyclohexyl)-biphenyl,
2 % 4-(trans-4-Propylcyclohexyl)-4'-methoxytolan,
2 % 4-(trans-4-Propylcyclohexyl)-4'-ethoxytolan,
3 % 4-(trans-4-Propylcyclohexyl)-4'-propoxytolan,
4 % 4-Methyl-4'-ethoxytolan und
4 % 4-Ethyl-4'-methoxytolan
und einer chiralen Komponente (p-(p-n-Hexylbenzoyloxy)benzoesäure-2-octylester) zeigt kurze Schaltzeiten.

### Beispiel 4

Ein SFA vom Typ STN enthaltend eine Flüssigkristallmischung mit folgenden Parametern:

| | |
|---|---|
| Klärpunkt | 81 ° |
| Δn | 0,1130 |
| Δε | + 6,5 |

und bestehend aus einer Basismischung aus
20 % p-trans-4-Propylcyclohexan-benzonitril,
10 % trans-1-p-Methoxyphenyl-4-propylcyclohexan,
5,6 % trans-1--p-Trifluormethoxyphenyl-4-propylcyclohexan,
5,6 % trans-1-p-Trifluormethoxyphenyl-4-butylcyclohexan,
5,6 % trans-1-p-Trifluormethoxyphenyl-4-pentylcyclohexan,
7 % p-[trans-4-(trans-4-Propylcyclohexyl)-cyclohexyl]-trifluormethoxybenzol,
6,3 % p-[trans-4-(trans-4-Pentylcyclohexyl)-cyclohexyl]-trifluormethoxybenzol,
6,3 % 1-[trans-4-(trans-4-Propylcyclohexyl)-cyclohexyl]-2-(p-trifluormethoxyphenyl)-ethan,
5,6 % 1-[trans-4-(trans-4-Pentylcyclohexyl)-cyclohexyl]-2-(p-trifluormethoxyphenyl)-ethan,
5,6 % 1-[trans-4-(trans-4-Propylcyclohexyl)-cyclohexyl]-2-(3,4-difluorphenyl)-ethan,
5,6 % 1-[trans-4-(trans-4-Propylcyclohexyl)-cyclohexyl]-2-(p-trifluormethyl)-ethan,
7 % 4-Trifluormethoxy-4'-(trans-4-propylcyclohexyl)-biphenyl,
3,5 % 4-(trans-4-Propylcyclohexyl)-4'-methoxytolan,
2,8 % 4-(trans-4-Propylcyclohexyl)-4'-ethoxytolan und
3,5 % 4-(trans-4-Propylcyclohexyl)-4'-propoxytolan
und einer chiralen Komponente (p-(p-n-Hexylbenzoyloxy)benzoesäure-2-octylester) zeigt kurze Schaltzeiten.

### Beispiel 5

Ein SFA vom Typ STN enthaltend eine Flüssigkristallmischung mit folgenden Parametern:

| | |
|---|---|
| Klärpunkt | 73 ° |
| Δn | 0,1252 |
| Δε | + 8,7 |

und bestehend aus einer Basismischung aus
20 % p-trans-4-Propylcyclohexan-benzonitril,
10 % trans-1-p-Methoxyphenyl-4-propylcyclohexan,
5,6 % 2-p-Fluorphenyl-5-propylpyrimidin,
5,6 % 2-p-Fluorphenyl-5-pentylpyrimidin,
5,6 % 2-p-Trifluormethoxyphenyl-5-pentylpyrimidin,
5,6 % 2-p-Trifluormethoxyphenyl-5-heptylpyrimidin,
7 % p-[trans-4-(trans-4-Propylcyclohexyl)-cyclohexyl]-trifluormethoxybenzol,
6,3 % p-[trans-4-(trans-4-Pentylcyclohexyl)-cyclohexyl]-trifluormethoxybenzol,
6,3 % 1-[trans-4-(trans-4-Propylcyclohexyl)-cyclohexyl]-2-(p-trifluormethoxyphenyl)-ethan,
5,6 % 1-[trans-4-(trans-4-Pentylcyclohexyl)-cyclohexyl]-2-(p-trifluormethoxyphenyl)-ethan,
5,6 % 1-[trans-4-(trans-4-Propylcyclohexyl)-cyclohexyl]-2-(3,4-difluorphenyl)-ethan,
5,6 % 1-[trans-4-(trans-4-Propylcyclohexyl)-cyclohexyl]-2-(p-trifluormethyl)-ethan,
3,5 % 4-(trans-4-Propylcyclohexyl)-4'-methoxytolan,
3,5 % 4-(trans-4-Propylcyclohexyl)-4'-ethoxytolan und
4,2 % 4-(trans-4-Propylcyclohexyl)-4'-propoxytolan
und einer chiralen Komponente (p-(p-n-Hexylbenzoyloxy)benzoesäure-2-octylester) zeigt kurze Schaltzeiten.

In der folgenden Tabelle sind physikalische Daten einer weiteren erfindungsgemäßen Mischung M52 angegeben, deren Zusammensetzung daran anschließend zu finden ist.

| | | Klp. | V_{10/0/20} | Δn | Δε |
|---|---|---|---|---|---|
| 90/2015 | M52 | 76 | 1,91 | 0,1152 | 8,6 |
| 90-499 | M30 | 82 | 1,93 | 0,1427 | |
| 90-502 | M31 | 84 | 2,01 | 0,1401 | 10,3 |
| 90-515 | M32 | 83 | 1,77 | 0,1405 | 12,3 |
| 90-602 | M33 | 86 | 1,8 | 0,14 | |
| 90-604 | M34 | 81 | 2,0 | 0,137 | |
| 90-605 | M35 | 94 | 1,9 | 0,15 | |
| 90-606 | M36 | 80 | 1,8 | 0,14 | |
| 90-607 | M37 | 87 | 1,8 | 0,14 | |
| 90-608 | M38 | 80 | 1,8 | 0,14 | |
| ZLI-4720-100 | M39 | 91 | 2,3 | 0,1299 | 9,6 |
| 90-609 | M40 | 85 | 2,2 | 0,125 | |
| 90/2008 | M41 | 76 | 2,15 | 0,1115 | |
| 90/370 | M42 | 76 | 1,63 | 0,1345 | |
| 90/371 | M43 | 70 | 1,44 | 0,1065 | |
| 90/373 | M44 | | 2,12 | 0,1678 | |
| 90/409 | M45 | 68 | 1,42 | 0,1306 | |
| 90/414 | M46 | 74 | 1,44 | 0,1136 | |
| 90/416 | M47 | 63 | 1,66 | 0,1617 | |
| 90/411 | M48 | 72 | 1,89 | 0,1306 | |
| 90/415 | M49 | 78 | 2,07 | 0,1193 | |
| 90/417 | M50 | 80 | 1,86 | 0,1609 | |
| 90/2014 | M51 | 71 | 1,70 | 0,1401 | 10,5 |
| 90/2015 | M52 | 76 | 1,91 | 0,1152 | 8,6 |
| 90/487 | M53 | 87 | 1,90 | 0,1401 | 11,4 |

| 89-263 (M1) | |
|---|---|
| D-50CF2 | 30 % |
| PCH-53 | 11 % |
| 132 | 16 % |
| 135 | 10 % |
| BCH-32 | 9 % |
| CBC-33 | 4 % |
| CBC-53 | 4 % |
| CBC-55 | 4 % |
| CBC-33F | 4 % |
| CBC-53F | 5 % |
| CBC-55F | 3 % |

| 89-220 (M2) | |
|---|---|
| PYP-50CF3 | 18 % |
| PYP-70CF3 | 18 % |
| PCH-301 | 13 % |
| CCH-303 | 13 % |
| CH-35 | 4 % |
| CH-43 | 4 % |
| CH-45 | 4 % |
| CBC-33 | 4 % |
| CBC-53 | 5 % |
| CBC-55 | 4 % |
| CBC-33F | 4 % |
| CBC-53F | 5 % |
| CBC-55F | 4 % |

| 89-172 (M3) | |
|---|---|
| CCP-30CF3 | 20 % |
| CCP-50CF3 | 20 % |
| PCH-301 | 15% |
| PCH-302 | 10 % |
| CCH-303 | 10 % |
| CCH-501 | 9 % |
| CBC-33 | 3 % |
| CBC-53 | 4 % |
| CBC-33F | 3 % |
| CBC-53F | 3 % |
| CBC-55F | 3 % |

| 89-83 (M4) | |
|---|---|
| PCH-3 | 14 % |
| PCH-5F | 10 % |
| PCH-7F | 10 % |
| PCH-50CF2 | 20 % |
| ECCP-3F | 6 % |
| ECCP-5F | 6 % |
| ECCP-33 | 5 % |
| CBC-33 | 5 % |
| CBC-53 | 5 % |
| CBC-55 | 4 % |
| CBC-33F | 5 % |
| CBC-53F | 5 % |
| CBC-55F | 5 % |

| 89-25 (M6) | |
|---|---|
| PCH-5F | 14 % |
| PCH-6F | 13 % |
| PCH-7F | 14 % |
| I32 | 16 % |
| I35 | 10 % |
| BCH-32 | 9 % |
| CBC-33 | 4 % |
| CBC-53 | 4 % |
| CBC-55 | 4 % |
| CBC-33F | 4 % |
| CBC-53F | 5 % |
| CBC-55F | 3 % |

| 89-15 (M7) | |
|---|---|
| PCH-30CF2 | 20 % |
| PCH-50CF2 | 10 % |
| CCH-303 | 13 % |
| CCH-502 | 13 % |
| ECCP-31 | 4 % |
| ECCP-32 | 4 % |
| ECCP-33 | 4 % |
| ECCP-35 | 4 % |
| BCH-32 | 9 % |
| BCH-52 | 9 % |
| CBC-33F | 4 % |
| CBC-53F | 3 % |
| CBC-55F | 3 % |

| ZLI-4582 (M9) | |
|---|---|
| PCH-3 | 7 % |
| PCH-5F | 12 % |
| PCH-6F | 12 % |
| PCH-7F | 10 % |
| ECCP-3F | 7 % |
| ECCP-5F | 7 % |
| PCH-53 | 8 % |
| ECCP-33 | 5 % |
| CBC-33 | 5 % |
| CBC-53 | 6 % |
| CBC-55 | 5 % |
| CBC-33F | 5 % |
| CBC-53F | 6 % |
| CBC-55F | 5 % |

| ZLI-4581 (M10) | |
|---|---|
| PCH-3 | 10 % |
| PCH-5F | 18 % |
| PCH-6F | 14 % |
| PCH-7F | 10 % |
| ECCP-3F | 9 % |
| ECCP-5F | 7 % |
| ECCP-33 | % |
| CBC-33 | 5 % |
| CBC-53 | 6 % |
| CBC-55 | 5 % |
| CBC-33F | 5 % |
| CBC-53F | 6 % |
| CBC-55F | 5 % |

| ZLI-4580 (M11) | |
|---|---|
| PCH-3 | 18 % |
| PCH-5F | 12 % |
| PCH-6F | 12 % |
| PCH-7F | 10 % |
| ECCP-3F | 7 % |
| ECCP-5F | 7 % |
| ECCP-33 | 5 % |
| CBC-33 | 5 % |
| CBC-53 | 5 % |
| CBC-55 | 4 % |
| CBC-33F | 5 % |
| CBC-53F | 5 % |
| CBC-55F | 5 % |

| 89-374 (M13) | |
|---|---|
| PCH-5F | 15 % |
| PCH-7F | 15 % |
| PCH-53 | 20 % |
| BCH-32 | 14 % |
| BCH-52 | 11 % |
| CBC-33 | 3 % |
| CBC-53 | 4 % |
| CBC-55 | 4 % |
| CBC-33F | 5 % |
| CBC-53F | 6 % |
| CBC-55F | 3 % |

| 89-796 (M18) | |
|---|---|
| PCH-3 | 15 % |
| PCH-4 | 10 % |
| PCH-301 | 16 % |
| PCH-302 | 10 % |
| PTP-40F | 23 % |
| CBC-33F | 4 % |
| CBC-53F | 5 % |
| CBC-55F | 4 % |
| CBC-33 | 4 % |
| CBC-53 | 5 % |
| CBC-55 | 4 % |

| 90-442 (M21) | |
|---|---|
| PCH-2 | 4 % |
| PCH-3 | 17 % |
| PCH-4 | 12 % |
| PCH-5 | 11 % |
| CCP-30CF3 | 7 % |
| CCP-50CF3 | 6 % |
| ECCP-31 | 4 % |
| ECCP-32 | 4 % |
| ECCP-3F | 6 % |
| ECCP-5F | 6 % |
| CPTP-301 | 5 % |
| CPTP-302 | 5 % |
| PTP-40F | 7 % |
| PTP-50F | 6 % |

| 89/1018 (M22) | |
|---|---|
| PCH-3 | 22 % |
| PCH-4 | 18 % |
| PTP-70F | 6 % |
| PTP-102 | 5 % |
| PTP-201 | 7 % |
| CP-3F | 10 % |
| CP-5F | 8 % |
| ECCP-3F | 4 % |
| BCH-32 | 10 % |
| BCH-5.F2 | 10 % |

| 89/1020 (M23) | |
|---|---|
| PCH-3 | 22 % |
| PCH-4 | 17 % |
| K6 | 9 % |
| K9 | 3 % |
| PTP-70F | 6 % |
| CP-3F | 10 % |
| CP-5F | 9 % |
| ECCP-3F | 9 % |
| CPTP-301 | 5 % |
| CPTP-302 | 4 % |

| 89/1034 (M24) | |
|---|---|
| PCH-3 | 22 % |
| PCH-4 | 16 % |
| K6 | 2 % |
| PTP-40F | 8 % |
| PTP-102 | 4 % |
| PTP-201 | 5 % |
| CP-3F | 10 % |
| CP-5F | 8 % |
| ECCP-3F | 5 % |
| BCH-32 | 8 % |
| BCH-5.F2 | 10 % |
| CPTP-301 | 2 % |

| 89/1036 (M25) | |
|---|---|
| PCH-3 | 21 % |
| K6 | 6 % |
| PTP-40F | 8 % |
| PTP-102 | 6 % |
| PTP-201 | 7 % |
| CP-3F | 10 % |
| CP-5F | 10 % |
| ECCP-3F | 11 % |
| BCH-32 | 10 % |
| BCH-5.F2 | 11 % |

| 89/1037 (M26) | |
|---|---|
| PCH-3 | 15 % |
| K6 | 6 % |
| K9 | 6 % |
| PTP-40F | 8 % |
| PTP-102 | 4 % |
| PTP-201 | 6 % |
| PCH-302 | 3 % |
| CP-3F | 10 % |
| CP-5F | 10 % |
| ECCP-3F | 11 % |
| BCH-32 | 10 % |
| BCH-5.F2 | 11 % |

| 89-733 (M27) | |
|---|---|
| PCH-3 | 21 % |
| K6 | 6 % |
| PTP-40F | 8 % |
| PTP-35 | 7 % |
| PTP-201 | 7 % |
| CP-3F | 10 % |
| CP-5F | 8 % |
| ECCP-3F | 12 % |
| BCH-32 | 10 % |
| BCH-5.F2 | 11 % |

| 9081 (M29) | |
|---|---|
| PCH-2 | 7 % |
| PCH-3 | 18 % |
| PCH-4 | 14 % |
| PCH-5 | 15 % |
| PCH-7 | 7 % |
| BCH-32 | 10 % |
| CPTP-301 | 4 % |
| CPTP-302 | 3 % |
| CPTP-303 | 3 % |
| ECCP-3 | 7 % |
| ECCP-3F | 6 % |
| ECCP-5F | 6 % |

| 90-499 (M30) | |
|---|---|
| PCH-3 | 18 % |
| PCH-4 | 8 % |
| PCH-5 | 10 % |
| PCH-301 | 13 % |
| ME2N.F | 3 % |
| ME3N.F | 3 % |
| PTP-102 | 3 % |
| PTP-201 | 4 % |
| CPTP-301 | 4 % |
| CPTP-302 | 4 % |
| CPTP-303 | 4 % |
| ECCP-3F | 6 % |
| ECCP-5F | 6 % |
| ECCP-31 | 3 % |
| ECCP-32 | 2 % |
| CCP-30CF3 | 5 % |
| CCP-50FF3 | 4 % |

| 90502 (M31) | |
|---|---|
| PCH-3 | 18 % |
| PCH-4 | 8 % |
| PCH-5 | 10 % |
| PCH-301 | 11 % |
| ME2N.F | 3 % |
| ME3N.F | 3 % |
| PTP-102 | 4 % |
| PTP-201 | 3 % |
| CPTP-301 | 3 % |
| CPTP-302 | 4 % |
| CPTP-303 | 3 % |
| ECCP-3F | 6 % |
| ECCP-5F | 6 % |
| ECCP-31 | 5 % |
| ECCP-32 | 4 % |
| CCP-30CF3 | 5 % |
| CCP-50CF3 | 4 % |

| 90-515 (M32) | |
|---|---|
| PCH-3 | 18 % |
| PCH-4 | 8 % |
| PCH-5 | 10 % |
| PCH-301 | 8 % |
| ME2N.F | 3 % |
| ME3N.F | 3 % |
| ME5N.F | 5 % |
| PTP-102 | 5 % |
| CPTP-301 | 3 % |
| CPTP-302 | 4 % |
| CPTP-303 | 3 % |
| ECCP-3F | 6 % |
| ECPP-5F | 6 % |
| ECCP-31 | 5 % |
| ECCP-32 | 4 % |
| CCP-30CF3 | 5 % |
| CCP-50CF3 | 4 % |

| 90-602 (M33) | |
|---|---|
| PCH-2 | 5 % |
| PCH-3 | 15 % |
| PCH-4 | 11 % |
| PCH-5 | 21 % |
| PCH-7 | 11 % |
| PCH-32 | 5 % |
| CFET-3F | 12 % |
| CFET-5F | 10 % |
| CBC-33 | 4 % |
| CBC-53 | 6 % |

| 90-604 (M34) | |
|---|---|
| PCH-2 | 5 % |
| PCH-3 | 15 % |
| PCH-4 | 11 % |
| PCH-5 | 21 % |
| PCH-32 | 5 % |
| FET-3F | 14 % |
| FET-5F | 11 % |
| CBC-33 | 6 % |
| CBC-53 | 6 % |
| CBC-55 | 6 % |

| 90-605 (M35) | |
|---|---|
| PCH-3 | 15 % |
| PCH-4 | 11 % |
| PCH-5 | 21 % |
| PCH-7 | 11 % |
| CFET-3F | 12 % |
| CFET-5F | 10 % |
| FET-3F | 5 % |
| FET-5F | 5 % |
| CBC-33 | 4 % |
| CBC-53 | 6 % |

| 90-606 (M36) | |
|---|---|
| PCH-3 | 15 % |
| PCH-4 | 11 % |
| PCH-5 | 21 % |
| PCH-7 | 11 % |
| PCH-32 | 5 % |
| CFET-3F | 8 % |
| CFET-5F | 6 % |
| FET-3F | 7 % |
| FET-5F | 7 % |
| CBC-33 | 4 % |
| CBC-53 | 5 % |

| 90-607 (M37) | |
|---|---|
| PCH-2 | 5 % |
| PCH-3 | 15 % |
| PCH-4 | 11 % |
| PCH-5 | 21 % |
| PCH-7 | 11 % |
| PCH-32 | 5 % |
| CFET-3F | 12 % |
| CFET-3F.F | 10 % |
| CBC-33 | 4 % |
| CBC-53 | 6 % |

| 90-608 (M38) | |
|---|---|
| PCH-2 | 5 % |
| PCH-3 | 15 % |
| PCH-4 | 11 % |
| PCH-5 | 21 % |
| PCH-7 | 11 % |
| PCH-32 | 5 % |
| CPTP-30CF3 | 12 % |
| CPTP-50CF3 | 10 % |
| CBC-33 | 4 % |
| CBC-53 | 6 % |

| ZLI-4720-100 (M 39) | |
|---|---|
| PCH-3 | 18 % |
| PCH-4 | 14 % |
| PCH-5 | 12 % |
| PCH-7 | 8% |
| PTP-102 | 3 % |
| PTP-201 | 3 % |
| CPTP-302 | 3 % |
| ECCP-31 | 4 % |
| ECCP-32 | 5 % |
| ECCP-33 | 5 % |
| ECCP-35 | 4 % |
| ECCP-3 | 7% |
| ECCP-3F | 7 % |
| ECCP-5F | 7 % |

| 90609 (M 40) | |
|---|---|
| PCH-3 | 18 % |
| PCH-4 | 14 % |
| PCH-5 | 12 % |
| PCH-7 | 8 % |
| PTP-20F | 3 % |
| PTP-40F | 3 % |
| CPTP-30CF3 | 3 % |
| ECCP-31 | 4 % |
| ECCP-32 | 5 % |
| ECCP-33 | 5 % |
| ECCP-35 | 4 % |
| ECCP-3 | 7 % |
| ECCP-3F | 7 % |
| ECCP-5F | 7 % |

| 90/2008 (M 41) | |
|---|---|
| PCH-3 | 10 % |
| PYP-3F | 10 % |
| PYP-5F | 9 % |
| PCH-5F | 9 % |
| PCH-7F | 9 % |
| ECCP-3F | 13 % |
| ECCP-5F | 12 % |
| CP-3F | 9 % |
| CP-5F | 9 % |
| CPTP-301 | 5 % |
| CPTP-303 | 5 % |

| 90/370 (M 42) | |
|---|---|
| PYP-3F | 7 % |
| PCH-3 | 11 % |
| PCH-5 | 10 % |
| PCH-7 | 10 % |
| PTP-35 | 16 % |
| CPTP-303 | 4 % |
| CCP-20CF3 | 15 % |
| CCP-30CF3 | 21 % |
| CCP-50CF3 | 6 % |

| 90/371 (M 43) | |
|---|---|
| PYP-3F | 7 % |
| PCH-3 | 11 % |
| PCH-5 | 10 % |
| PCH-7 | 10 % |
| PCH-301 | 16 % |
| CPTP-303 | 4 % |
| CCP-20CF3 | 15 % |
| CCP-30CF3 | 21 % |
| CCP-50CF3 | 6 % |

| 90/373 (M 44) | |
|---|---|
| PYP-3F | 7 % |
| PCH-3 | 9 % |
| PCH-5 | 10 % |
| PCH-7 | 9 % |
| PTP-35 | 15 % |
| PTP-45 | 19 % |
| CPTP-303 | 4 % |
| BCH-32 | 14 % |
| BCH-52F | 13 % |

| 90/409 (M 45) | |
|---|---|
| PYP-3F | 7 % |
| PCH-3 | 21 % |
| PCH-5 | 10 % |
| PCH-7 | 10 % |
| PCH-301 | 10 % |
| PTP-102 | 4 % |
| PTP-201 | 4 % |
| CPTP-303 | 6 % |
| CCP-20CF3 | 8 % |
| CCP-30CF3 | 8 % |
| CCP-40CF3 | 6 % |
| CCP-50CF3 | 6 % |

| 90/414 (M 46) | |
|---|---|
| PYP-3F | 7 % |
| PCH-3 | 11 % |
| PCH-5 | 10 % |
| PCH-7 | 10 % |
| PCH-301 | 13 % |
| CPTP-303 | 4 % |
| PTP-102 | 3 % |
| CCP-20CF3 | 10 % |
| CCP-30CF3 | 11 % |
| CCP-40CF3 | 10 % |
| CCP-50CF3 | 11 % |

| 90/416 (M 47) | |
|---|---|
| PYP-3F | 10 % |
| K6 | 10 % |
| PCH-3 | 11 % |
| PCH-5 | 10 % |
| PCH-7 | 10 % |
| PCH-301 | 12 % |
| PTP-35 | 5 % |
| PTP-102 | 5 % |
| CPTP-302 | 5 % |
| CPTP-303 | 5 % |
| BCH-32 | 8 % |
| BCH-52F | 9 % |

| 90/411 (M 48) | |
|---|---|
| PYP-3F | 7 % |
| PCH-3 | 21 % |
| PCH-5 | 10 % |
| PCH-7 | 10 % |
| PCH-301 | 10 % |
| PTP-102 | 4 % |
| PTP-201 | 3 % |
| CPTP-303 | 6 % |
| CCP-30CF3 | 10 % |
| CCP-50CF3 | 10 % |
| ECCP-32 | 4 % |
| ECCP-33 | 5 % |

| 90/415 (M 49) | |
|---|---|
| PYP-3F | 6 % |
| PCH-3 | 14 % |
| PCH-5 | 10 % |
| PCH-7 | 10 % |
| PCH-301 | 13 % |
| CPTP-303 | 4 % |
| PTP-102 | 4 % |
| CCP-30CF3 | 11 % |
| CCP-50CF3 | 11 % |
| ECCP-32 | 9 % |
| ECCP-33 | 8 % |

| 90/417 (M 50) | |
|---|---|
| PYP-3F | 4 % |
| PCH-3 | 22 % |
| PCH-5 | 11 % |
| PCH-7 | 13 % |
| PCH-301 | 11 % |
| PTP-102 | 5 % |
| PTP-201 | 4 % |
| CPTP-301 | 4 % |
| CPTP-302 | 3 % |
| CPTP-303 | 5 % |
| BCH-32 | 10 % |
| BCH-52F | 8 % |

| 90/2014 (M51) | |
|---|---|
| K6 | 7,0 |
| PCH-3 | 28,0 |
| PCH-5 | 13,0 |
| PCH-301 | 11,0 |
| CCP-20CF3 | 8,0 |
| CCP-30CF3 | 8,0 |
| CCP-40CF3 | 5,0 |
| CCP-50CF3 | 6,0 |
| PTP-102 | 3,0 |
| CPTP-301 | 6,0 |

| 901/2015 (M52) | |
|---|---|
| PCH-3 | 21,0 |
| PCH-5 | 10.0 |
| PCH-7F | 15.0 |
| CCP-20CF3 | 12,0 |
| CCP-30CF3 | 13.0 |
| CCP-40CF3 | 10,0 |
| CCP-50CF3 | 8,0 |
| PTP-102 | 7.0 |
| CPTP-301 | 4,0 |

- PCH-53:: trans-1-p-Propylphenyl-4-pentylcyclohexan
- 1-32:: 1-(trans-4-Propylcyclohexyl)-2-(4'-ethyl-2'-fluorbiphenyl-4-yl)-ethan
- 1-35:: 1-(trans-4-Propylcyclohexyl)-2-(4'-pentyl-2'-fluorbiphenyl-4-yl)-ethan
- BCH-32:: 4-Ethyl-4'-(trans-4-propylcyclohexyl)-biphenyl
- BCH-52:: 4-Ethyl-4'-(trans-4-pentylcylcohexyl)-biphenyl
- CCH-303:: trans,trans-4-Propoxy-4'-propylcyclohexylcyclohexan
- CCH-501:: trans,trans-4-Methoxy-4'-pentylcyclohexylcyclohexan
- CH-35:: trans,trans-4-Propylcyclohexylcyclohexancarbonsäure-trans-4-pentylcyclohexylester
- CH-43:: trans,trans-4-Butylcyclohexylcyclohexancarbonsäure-trans-4-propylcyclohexylester
- CH-45:: trans,trans-4-Butylcyclohexylcyclohexancarbonsäure-trans-4-pentylcyclohexylester
- PCH-302:: trans-1--p-Ethoxyphenyl-4-propylcyclohexan
- PCH-303:: trans-1-p-Propoxyphenyl-4-propylcyclohexan
- PCH-304:: trans-1-p-Butoxyphenyl-4-propylcyclohexan
- CCH-502:: trans,trans-4-Ethoxy-4'-pentylcyclohexylcyclohexan
- ECCP-32:: 1-[trans-4-(trans-4-Propylcyclohexyl)-cyclohexyl]-2-(p-ethylphenyl)-ethan
- ECCP-31:: 1-[trans-4-(trans-4-Propylcyclohexyl)-cyclohexyl]-2-(p-methylphenyl)-ethan
- ECCP-35:: 1-[trans-4-(trans-4-Propylcyclohexyl)-cyclohexyl]-2-(p-pentylphenyl)-ethan
- PCH-501:: trans-1-p-Methoxyphenyl-4-pentylcyclohexan
- PCH-502:: trans-1-p-Ethoxyphenyl-4-pentylcyclohexan
- CP-33:: trans,trans-4-Propylcyclohexylcyclohexancarbonsäure-p-propylphenylester
- CP-35:: trans,trans-4-Propylcyclohexylcyclohexancarbonsäure-p-pentylphenylester
- CP-43:: trans,trans-4-Butylcyclohexylcyclohexancarbonsäure-p-propylphenylester
- CP-45:: trans,trans-4-Butylcyclohexylcyclohexancarbonsäure-p-pentylphenylester
- PTP-40F:: 4-Butoxy-4'-fluortolan
- PTP-50F:: 4-Pentoxy-4'-fluortolan
- PTP-70F:: 4-Heptoxy-4'-fluortolan
- PCH-301:: trans-1-p-Methoxyphenyl-4-propylcyclohexan
- CCH-301:: trans,trans-4-Methoxy-4'-propylcyclohexylcyclohexan
- CBC-33F:: 4,4'-Bis-(trans-4-propylcyclohexyl)-2-fluorbiphenyl
- CBE-55F:: 4,4'-Bis-(trans-4-pentylcyclohexyl)-2-fluorbiphenyl
- CBC-53F:: 4-(trans-4-Pentylcyclohexyl)-4'-(trans-4-propylcyclohexyl)-2-fluorbiphenyl
- CBC-33:: 4,4'-Bis-(trans-4-propylcyclohexyl)-biphenyl
- CBC-55:: 4,4'-Bis-(trans-4-pentylcyclohexyl)-biphenyl
- CBC-53:: 4-(trans-4-Pentylcyclohexyl)-4'-(trans-4-propylcyclohexyl)-biphenyl
- ECCP-33:: 1-[trans-4-(trans-4-Propylcyclohexyl)-cyclohexyl]-2-(p-propylphenyl)-ethan
- CCH-51 F:: trans,trans-4-Fluormethyl-4'-pentylcyclohexylcyclohexan
- CCH-31 F:: trans,trans-4 -Fluormethyl-4'-propylcyclohexylcyclohexan
- PTP-102:: 4-Methyl-4'-ethoxy-tolan
- PTP-201:: 4-Methoxy-4'-ethyl-tolan
- CPTP-301:: 4-(trans-4-Propylcyclohexyl)-4'-methoxytolan
- CPTP-302:: 4-(trans-4-Propylcyclohexyl)-4'-ethoxytolan
- C PTP-303:: 4-(trans-4-Propylcyclohexyl)-4'-propoxytolan
- PCH-5F:: trans-1-p-Fluorphenyl-4-pentylcyclohexan
- PCH-6F:: trans-1-p-Fluorphenyl-4-hexylcyclohexan
- PCH-7F:: trans-1-p-Fluorphenyl-4-heptylcyclohexan
- EPCH-20CF₃:: 1-(trans-4-Ethylcyclohexyl)-2-(p-trifluormethoxyphenyl)-ethan
- EPCH-30CF₃:: 1-(trans-4- Propylcyclohexyl)-2-(p-trifluormethoxyphenyl)-ethan
- EPCH-50CF₃:: 1-(trans-4-Pentylcyclohexyl)-2-(p-trifluormethoxyphenyl)-ethan
- EPCH-70CF₃:: 1-(trans-4-Heptylcyclohexyl)-2-(p-trifluormethoxyphenyl)-ethan
- PCH-30CF₃:: trans-1-p-Trifluormethoxyphenyl-4-propylcyclohexan
- PCH-50CF₃:: trans-1-p-Trifluormethoxyphenyl-4-pentylcyclohexan
- ECCP-30CF₃:: 1-[trans-4-(trans-4-Propylcyclohexyl)-cyclohexyl]-2-(p-trifluormethoxyphenyl)-ethan
- ECCP-50CF₃:: 1-[trans-4-(trans-4-Pentylcyclohexyl)-cyclohexyl]-2-(p-trifluormethoxyphenyl)-ethan
- CCP-20CF₃:: p-[trans-4-(trans-4-Ethylcyclohexyl)-cyclohexyl]-trifluormethoxybenzol
- CCP-30CF₃:: p-[trans-4-(trans-4-Propylcyclohexyl)-cyclohexyl]-trifluormethoxybenzol
- CCP-40CF₃:: p-[trans-4-(trans-4-Butylcyclohexyl)-cyclohexyl]-trifluormethoxybenzol
- CCP-50CF₃:: p-[trans-4-(trans-4-Pentylcyclohexyl)-cyclohexyl]-trifluormethoxybenzol
- BCH-30CF₃:: 4-Trifluormethoxy-4'-(trans-4-propylcyclohexyl)-biphenyl
- ECCP-3F.F:: 1-[trans-4-(trans-4-Propylcyclohexyl)-cyclohexyl]-2-(3,4-difluorphenyl)-ethan
- ECCP-5F.F:: 1-[trans-4-(trans-4-Pentylcyclohexyl)-cyclohexyl]-2-(3,4-difluorphenyl)-ethan
- CCP-3F.F:: 4-[trans-4-(trans-4-Propylcyclohexyl)-cyclohexyl]-1,2-difluorbenzol
- CCP-5F.F:: 4-[trans-4-(trans-4-Pentylcyclohexyl)-cyclohexyl]-1,2-difluorbenzol
- D-302FF:: 2,3-Difluor-4-ethoxyphenyl-trans-4-propylcyclohexyl-carboxylat
- D-502FF:: 2,3-Difluor-4-ethoxyphenyl-trans-4-pentylcyclohexyl-carboxylat
- CCP-3F:: 4-[trans-4-(trans-4-Propylcyclohexyl)-cyclohexyl]-fluorbenzol
- ECCP-3F:: 1-[trans-4-(trans-4-Propylcyclohexyl)-cyclohexyl]-2-(p-fluorphenyl)-ethan
- ECCP-5F:: 1-[trans-4-(trans-4-Pentylcyclohexyl)-cyclohexyl]-2-(p-fluorphenyl)-ethan
- CP-3F:: trans-4-(trans-4-Propylcyclohexyl)-cyclohexancarbonsäure-(p-fluorphenylester)
- CP-5F:: trans-4-(trans-4-Pentylcyclohexyl)-cyclohexancarbonsäure-(p-fluorphenylester)
- PYP-5F:: 2-p-Fluorphenyl-5-pentylpyrimidin
- PYP-6F:: 2-p-Fluorphenyl-5-hexylpyrimidin
- PYP-7F:: 2-p-Fluorphenyl-5-heptylpyrimidin
- PYP-30CF₃:: 2-p-Trifluormethoxyphenyl-5-propylpyrimidin
- PYP-50CF₃:: 2-p-Trifluormethoxyphenyl-5-pentylpyrimidin
- PYP-70CF₃:: 2-p-Trifluormethoxyphenyl-5-heptylpyrimidin
- PCH-3:: p-trans-4-Propylcyclohexyl-benzonitril
- PCH-4:: p-trans-4-Butylcyclohexyl-benzonitril
- PCH-5:: p-trans-4-Pentylcyclohexyl-benzonitril
- ECCP-3:: 1-[trans-4-(trans-4-Propylcyclohexyl)-cyclohexyl]-2-(p-cyanphenyl)-ethan
- ECCP-3CF₃:: 1-[trans-4-(trans-4-Propylcyclohexyl)-cyclohexyl]-2-(p-trifluormethylphenyl)-ethan
- ECCP-5CF₃:: 1-[trans-4-(trans-4-Pentylcyclohexyl)-cyclohexyl]-2-(p-trifluormethylphenyl)-ethan
- PYP-5N.F:: 2-(3-Fluor-4-cyanphenyl)-5-pentylpyrimidin
- PYP-7N.F:: 2-(3-Fluor-4-cyanphenyl)-5-heptylpyrimidin
- PCH-30CF₂:: trans-1-P-Difluormethoxyphenyl-4-propylcyclohexan
- PCH-50CF₂:: trans-1-p-Difluormethoxyphenyl-4-pentylcyclohexan
- PCH-3-OCF₂:: trans-1-p-Difluormethoxyphenyl-4-propylcyclohexan
- BCH-5.F2:: 4-(trans-4-Pentylcyclohexyl)-2'-fluor-4'-ethylbiphenyl
- K6:: 4-Ethyl-4'-cyanobiphenyl
- K9:: 4-Propyl-4'-cyanobiphenyl
- PTP-35:: 4-Propyl-4'-pentyltolan
- ME2N.F:: 3-Fluor-4-cyano-phenyl-4-ethylbenzoat
- ME3N.F:: 3-Fluor-4-cyano-phenyl-4-propylbenzoat
- ME5N.F:: 3-Fluor-4-cyano-phenyl-4-pentylbenzoat
- PCH-2:: p-trans-4-Ethylcyclohexylbenzonitril
- PCH-7:: p-trans-4-Heptylcyclohexylbenzonitril
- PCH-32:: trans-1-p-Ethylphenyl-4-propylcyclohexan
- CFET-3F:: 1-(4-(trans-4-propylcyclohexyl)-2-fluor4'-yl-biphenyl)-2-(4-fluorphenyl)-ethan
- CFET-5F:: 1-(4-(trans-4-pentylcyclohexyl)-2-fluor4'-yl-biphenyl)-2-(4-fluorphenyl)-ethan
- FET-3F:: 1-(2-fluor-4-propyl-4'-yl-biphenyl)-2-(4-fluorphenyl)-ethan
- FET-5F:: 1-(2-fluor-4-pentyl-4'-yl-biphenyl)-2-(4-fluorphenyl)-ethan
- CPTP-30CF3:: 4-(trans-4-propylcylcohexyl)-4'-trifluormethoxy-ethan
- CPTP-50CF3:: 4-(trans-4-pentylcylcohexyl)-4'-trifluormethoxy-ethan
- PTP-20F:: 4-Ethoxy-4'-fluortolan
- PYP-3F:: 2-(4-Fluorphenyl)-5-propylpyrimidin
- PTP35:: 4-Propyl-4'-pentyltolan
- PTP45:: 4-Butyl-4'-pentyltolan
- BCH-52F:: 4-(trans-4-Pentylcyclohexyl)-2-fluor-4'-ethylbiphenyl
- CP-302FF:: trans-4-(trans-4-Propylcyclohexyl)-cyclohexancarbonsäure-(2,3-difluor-4-ethoxyphenylester)
- PCH-301:: trans-1-p-Methoxyphenyl-4-propylcyclohexan
- PCH-401:: trans-1-p-Methoxyphenyl-4-butylcyclohexan
- D-302:: 4-Ethoxyphenyl-trans-4-propylcyclohexylcarboxylat
- D-402:: 4-Ethoxyphenyl-trans-4-butylcyclohexylcarboxylat

## Patentansprüche

1. Supertwist-Flüssigkristallanzeige
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 100 und 600°, dadurch gekennzeichnet, daß die nematische Flüssigkristallmischung
a) auf Komponente A, enthaltend eine oder mehrere Verbindungen, ausgewählt aus der Gruppe A, bestehend aus Verbindungen der Formeln IIa-IIc und IIe-IIk, basiert, 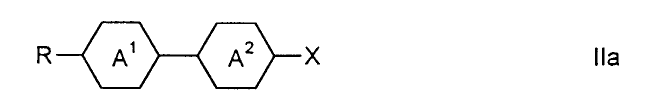 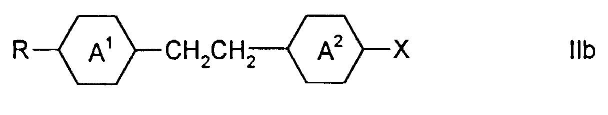 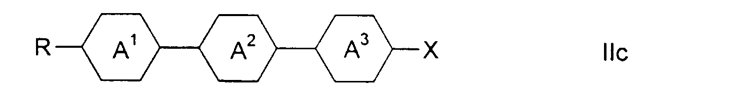 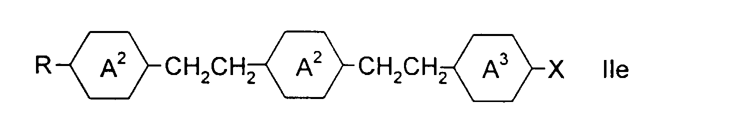 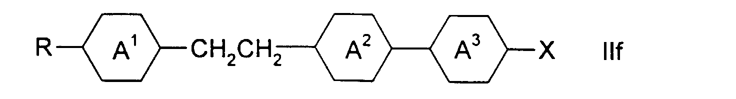 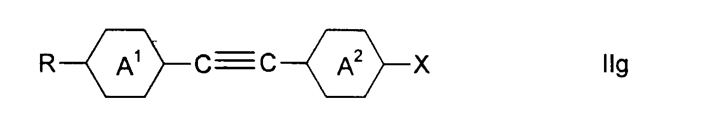 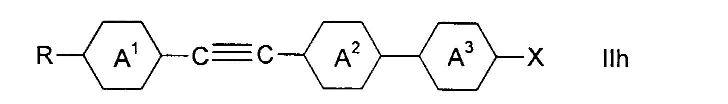 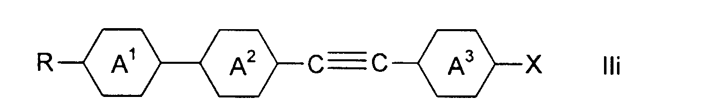 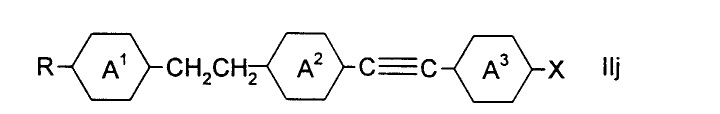 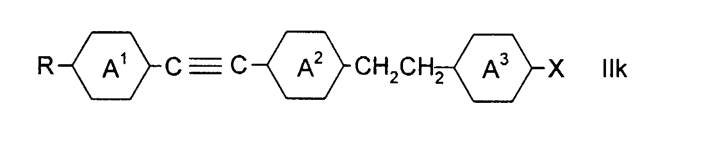 worin
R n-Alkyl oder n-Alkenyl mit bis zu 9 C-Atomen,
X F, Cl, -CF₃, -CHF₂, -OCF₃-, OCHF₂-, -OCF₂CF₂H oder -OC₂F₅, und die Ringe
A¹, A², und A³ jeweils unabhängig voneinander 1,4-Phenylen, 2- oder 3-Fluor-1,4-phenylen oder trans-1,4-Cyclohexylen oder einer der Ringe A¹, A² und A³ auch 1,4-Cyclohexenylen oder 2,3-Difluor-1,4-phenylen bedeuten,
b) 0-40 Gew.% einer flüssigkristallinen Komponente B bestehend aus einer oder mehreren Verbindungen mit einer dielektrischen Anisotropie von -1,5 bis +1,5 der allgemeinen Formel I 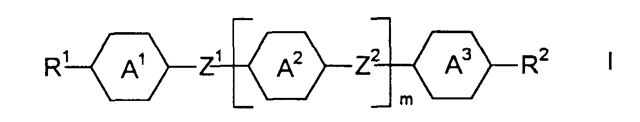 worin
R¹ und R² jeweils unabhängig voneinander n-Alkyl, n-Alkoxy, -nOxaalkyl, ω-Fluoralkyl, oder n-Alkenyl mit bis zu 9 C-Atomen, die Ringe
A¹, A² und A³ jeweils unabhängig voneinander 1,4-Phenylen, 2- oder 3-Fluor-1,4-phenylen, trans-1 ,4-Cyclohexylen oder 1,4-Cyclohexenylen,
Z¹ und Z² jeweils unabhängig voneinander -CH₂CH₂-, -C≡C- oder eine Einfachbindung, und
m 0, 1 oder 2 bedeutet,
c) 0-20 Gew.% einer flüssigkristallinen Komponente C bestehend aus einer oder mehreren Verbindungen mit einer dielektrischen Anisotropie von unter -1,5 enthält und
d) eine optisch aktive Komponente D in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und daß die nematische Flüssigkristallmischung 5 % bis 35 % an flüssigkristallinen Tolan-Verbindungen enthält, und daß die nematische Flüssigkristallmischung einen nematischen Phasenbereich von mindestens 60 °C, eine Viskosität von nicht mehr als 35 mPa.s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20 °C bezogen sind, und daß Komponente A Verbindungen der Formeln IIa bis IIc und IIe bis IIf, worin X Cyan bedeutet, und Verbindungen der Formel lla bis llc und IIe bis llf, worin X -NCS, F, Cl, -CF₃, -CHF₂, -OCF₃, -OCHF₂, -OCF₂CF₂H oder -OC₂F₅ bedeutet, enthält und der Anteil der Cyanverbindungen in Komponente A 0 bis 50 Gew.% beträgt.

2. Anzeige nach Anspruch 1, dadurch gekennzeichnet, daß Komponente A keine Verbindung der Formeln IIa bis IIc und IIe bis IIf, worin X Cyan bedeutet, enthält.

3. Anzeige nach mindestens einem der Ansprüche 1 bis 2, dadurch gekennzeichnet, daß X F, Cl, CF₃, -OCF₃, OCHF₂ oder -CHF₂ bedeutet.

4. Anzeige nach mindestens einem der Ansprüche 1 bis 3, dadurch gekennzeichnet, daß Komponente B eine oder mehrere Verbindungen ausgewählt aus der Gruppe bestehend aus 111 bis 117 enthält: 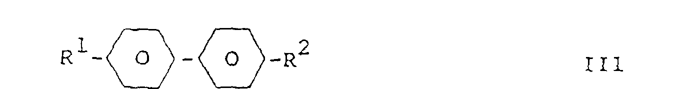 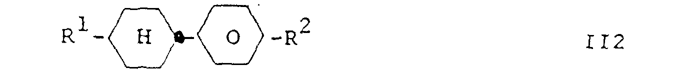 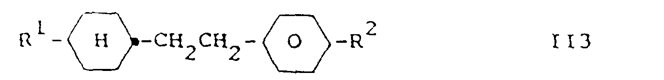 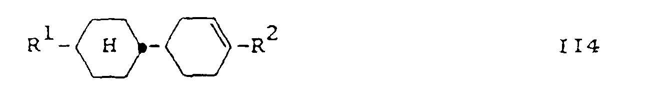 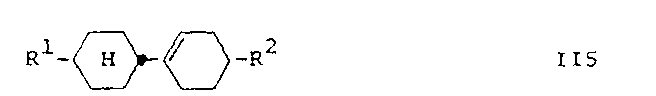 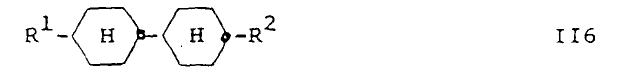 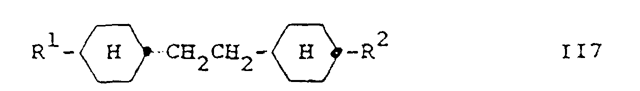 worin R¹ und R² die in Anspruch 1 angegebene Bedeutung haben.

5. Anzeige nach Anspruch 4, dadurch gekennzeichnet, daß Komponente B zusätzlich eine oder mehrere Verbindungen ausgewählt aus der Gruppe bestehend aus II8 bis II20 enthält: 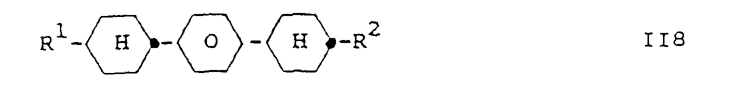 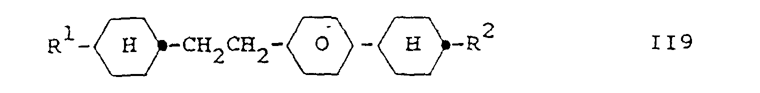 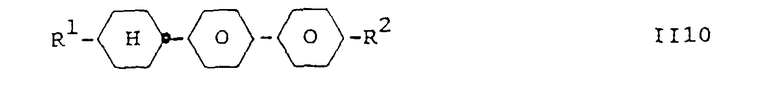 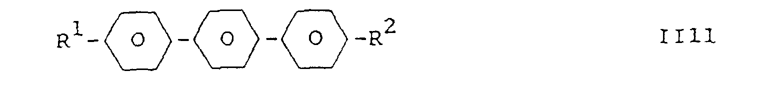 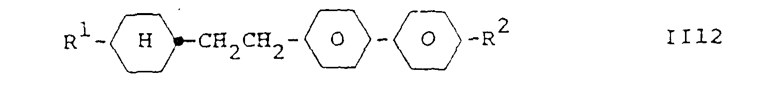 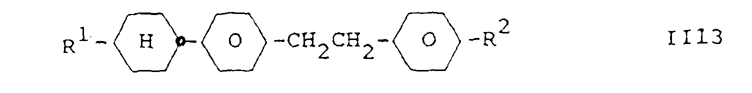 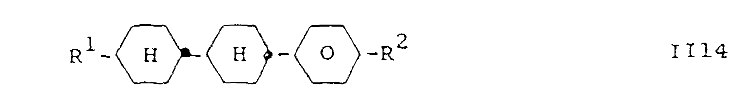 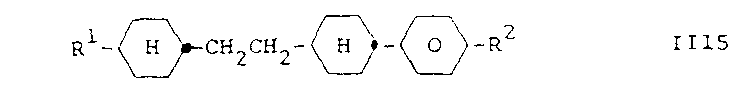 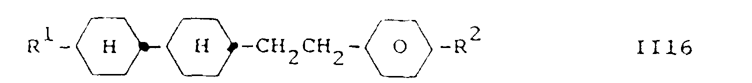 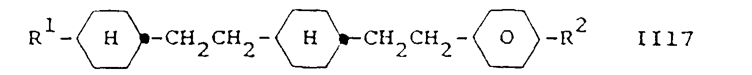 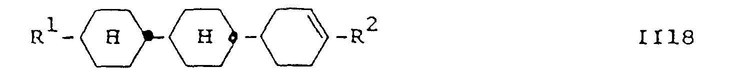 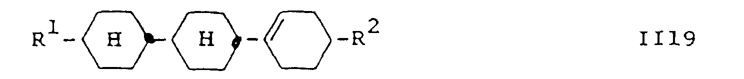 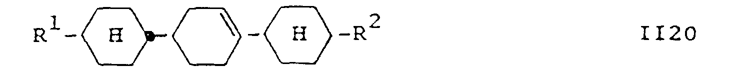 worin R¹ und R² die in Anspruch 1 angegebene Bedeutung haben und die 1,4-Phenylengruppen in II8 bis II17 jeweils unabhängig voneinander auch durch Fluor ein- oder mehrfach substituiert sein können.

6. Anzeige nach Anspruch 4 oder 5, dadurch gekennzeichnet, daß Komponente B zusätzlich eine oder mehrere Verbindungen ausgewählt aus der Gruppe bestehend aus II21 bis II25 enthält: 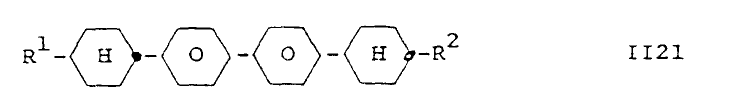 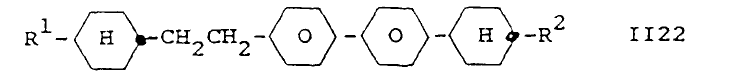 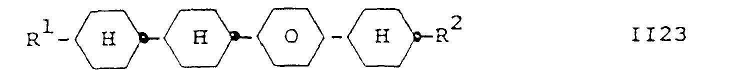 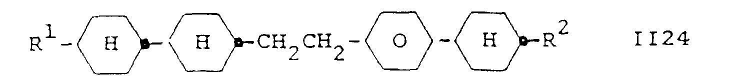 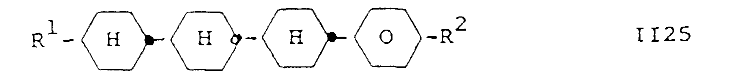 worin R¹ und R² die in Anspruch 1 angegebene Bedeutung haben und die 1,4-Phenylengruppen in II21 bis II25 jeweils unabhängig voneinander auch durch Fluor ein- oder mehrfach substituiert sein können.

7. Anzeige nach mindestens einem der Ansprüche 1 bis 6, dadurch gekennzeichnet, daß Komponente B eine oder mehrere Verbindungen ausgewählt aus der Gruppe bestehend aus II26 und II27 enthält: 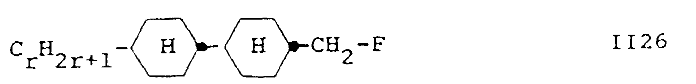 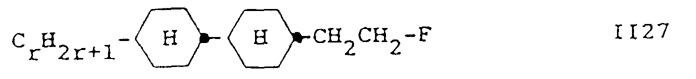 worin CᵣH₂ᵣ₊₁ eine geradkettige Alkylgruppe mit bis zu 7 C-Atomen ist.

8. Anzeige nach mindestens einem der Ansprüche 1 bis 7, dadurch gekennzeichnet, daß die Flüssigkristallmischung neben den Komponenten A, B und C zusätzlich eine oder mehrere Verbindungen ausgewählt aus der Gruppe bestehend aus III und IV enthält: 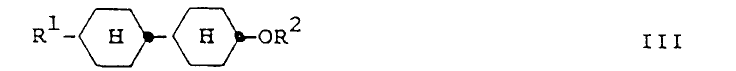 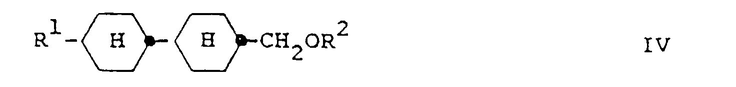 worin R¹ und R² die in Anspruch 1 angegebene Bedeutung haben.

9. Anzeige nach mindestens einem der Ansprüche 1-8, dadurch gekennzeichnet, daß die Flüssigkristallmischung neben den Komponenten A, B und C zusätzlich eine oder mehrere Verbindungen ausgewählt aus der Gruppe bestehend aus V und VI enthält: 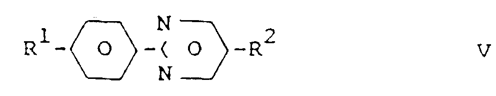 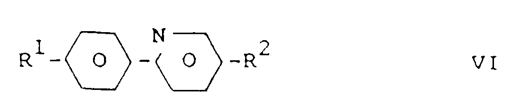 worin R¹ und R² die in Anspruch 1 angegebene Bedeutung haben.

10. Anzeige nach mindestens einem der Ansprüche 1-9, dadurch gekennzeichnet, daß die Komponente C eine oder mehrere Verbindungen ausgewählt aus der Gruppe bestehend aus VII bis Xl enthält: 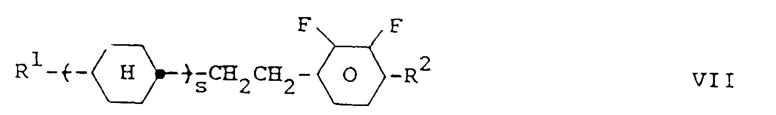 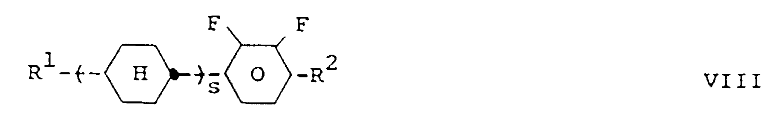 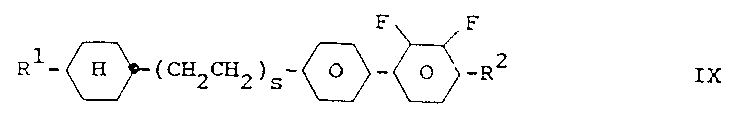 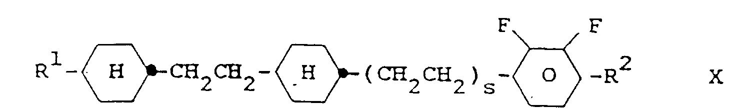 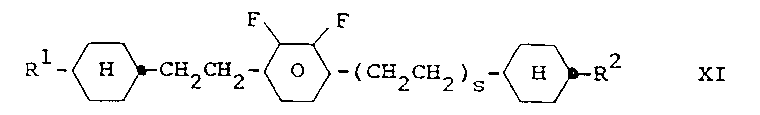 worin R¹ und R² die in Anspruch 1 angegebene Bedeutung haben und S 0 oder 1 ist.

11. Anzeige nach mindestens einem der Ansprüche 1-10, dadurch gekennzeichnet, daß die Komponente B eine oder mehrere Verbindungen ausgewählt aus der Gruppe bestehend aus XII bis XIV enthält; 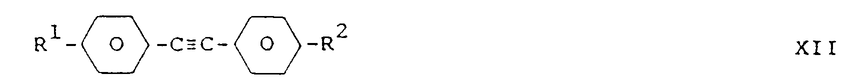 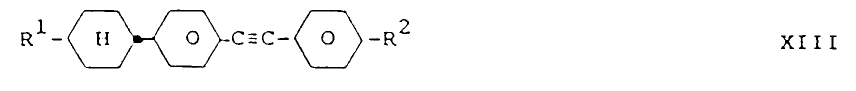 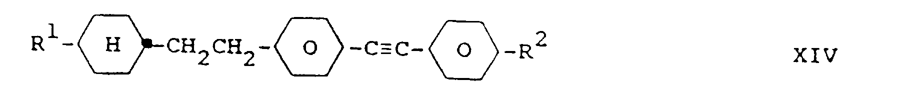 worin R¹ und R² die in Anspruch 1 angegebene Bedeutung haben.

12. Flüssigkristallmischung der in einem der Ansprüche 1 - 11 definierten Zusammensetzung, dadurch gekennzeichnet, daß diese eine hohe dielektrische Anisotropie Δε> 5 und einen hohen Anteil an Cyanverbindungen von mehr als 20 Gew.% und weniger als 50 Gew.% aufweisen.

## Claims

1. Supertwist liquid-crystal display having
- two plane-parallel outer plates which, together with a frame, form a cell,
- a nematic liquid-crystal mixture of positive dielectric anisotropy located in the cell,
- electrode layers with overlying alignment layers on the insides of the outer plates,
- a tilt angle between the longitudinal axis of the molecules at the surface of the outer plates and the outer plates of from about 1 degree to 30 degrees, and
- a twist angle of the liquid-crystal mixture in the cell from alignment layer to alignment layer with a value of between 100 and 600°,
characterized in that the nematic liquid-crystal mixture
a) is based on component A comprising one or more compounds selected from group A consisting of compounds of the formulae IIa-IIc and IIe-IIk, 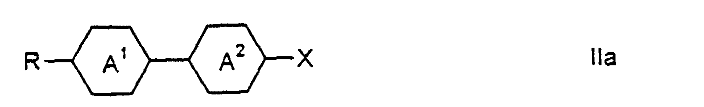 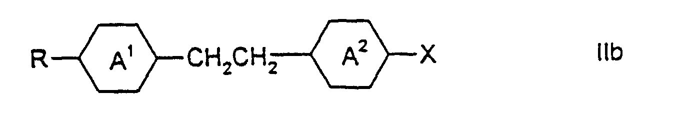 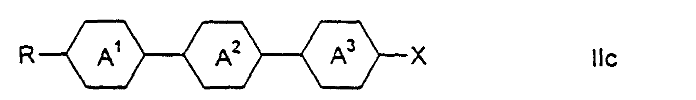 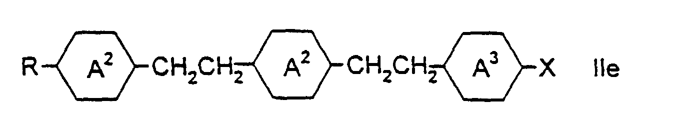 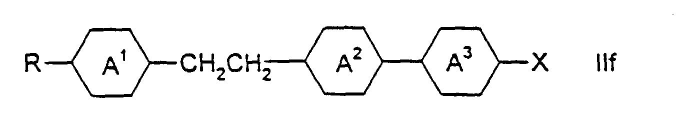 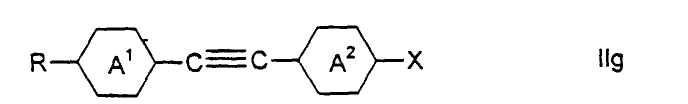 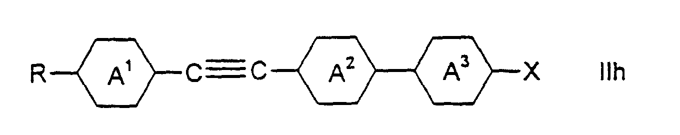 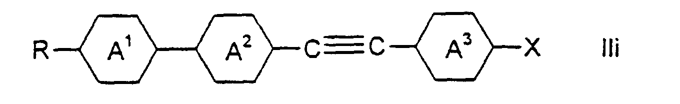 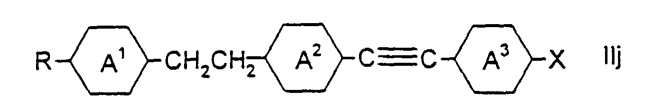 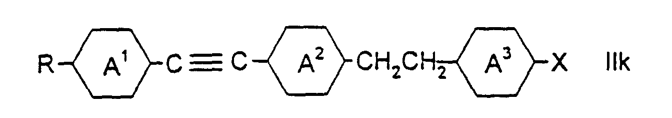 in which
R is n-alkyl or n-alkenyl having up to 9 carbon atoms,
X is F, Cl, -CF₃, -CHF₂, -OCF₃, -OCHF₂, -OCF₂CF₂H or -OC₂F₅, and the rings
A¹, A² and A³ are each, independently of one another, 1,4-phenylene, 2- or 3-fluoro-1,4-phenylene or trans-1,4-cyclohexylene, or one of the rings A¹, A² and A³ is alternatively 1,4-cyclohexenylene or 2,3-difluoro-1,4-phenylene,
b) 0-40% by weight of a liquid-crystalline component B consisting of one or more compounds having a dielectric anisotropy of from -1.5 to +1.5, of the general formula I 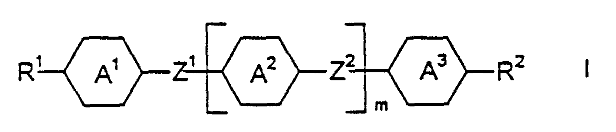 in which
R¹ and R² are each, independently of one another, n-alkyl, n-alkoxy, n-oxaalkyl, ω-fluoroalkyl or n-alkenyl having up to 9 carbon atoms, the rings
A¹, A² and A³ are each, independently of one another, 1,4-phenylene, 2- or 3-fluoro-1,4-phenylene, trans-1,4-cyclohexylene or 1,4-cyclohexenylene,
Z¹ and Z² are each, independently of one another, -CH₂CH₂-, -C≡C- or a single bond, and
m is 0, 1 or 2,
c) 0-20% by weight of a liquid-crystalline component C consisting of one or more compounds having a dielectric anisotropy of below -1.5, and
d) an optically active component D in such an amount that the ratio between the layer thickness (separation of the plane-parallel outer plates) and the natural pitch of the chiral nematic liquid-crystal mixture is from about 0.2 to 1.3, and in that the nematic liquid-crystal mixture comprises from 5% to 35% of liquid-crystalline tolan compounds, and in that the nematic liquid-crystal mixture has a nematic phase range of at least 60°C, a viscosity of not greater than 35 mPa.s and a dielectric anisotropy of at least +1, with dielectric anisotropies of the compounds and the parameters referring to the nematic liquid-crystal mixture are based on a temperature of 20°C, and in that component A comprises compounds of the formulae IIa to IIc and IIe to IIf in which X is cyano, and compounds of the formulae IIa to IIc and IIe to IIf in which X is -NCS, F, Cl, -CF₃, -CHF₂, -OCF₃, -OCHF₂, -OCF₂CF₂H or -OC₂F₅, and a proportion of the cyano compounds in component A is from 0 to 50% by weight.

2. Display according to Claim 1, characterized in that component A comprises no compound of the formulae IIa to IIc and IIe to IIf in which X is cyano.

3. Display according to at least one of Claims 1 and 2, characterized in that X is F, Cl, CF₃, -OCF₃, -OCHF₂ or -CHF₂.

4. Display according to at least one of Claims 1 to 3, characterized in that component B comprises one or more compound selected from the group consisting of II1 to II7: 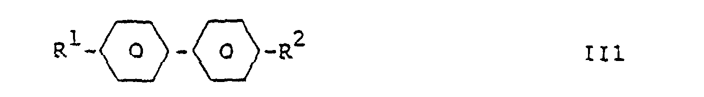 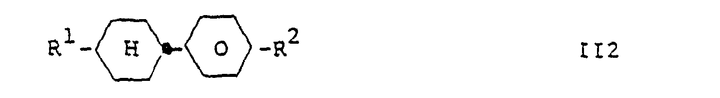 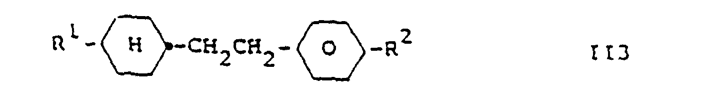 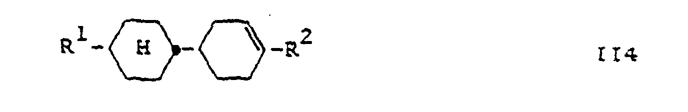 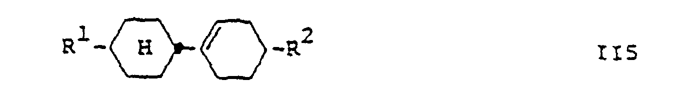 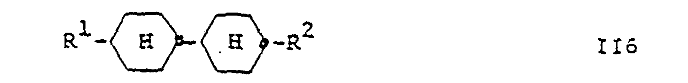 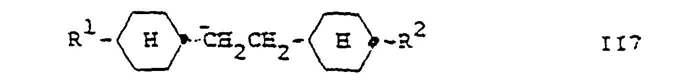 in which R¹ and R² are as defined in Claim 1.

5. Display according to Claim 4, characterized in that component B additionally comprises one or more compounds from the group consisting of II8 to II20: 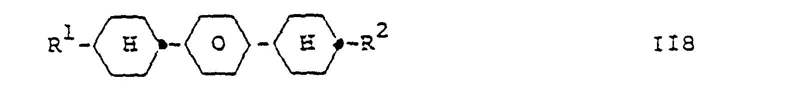 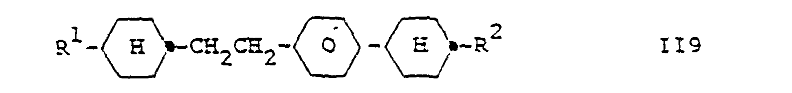 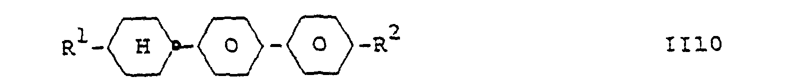 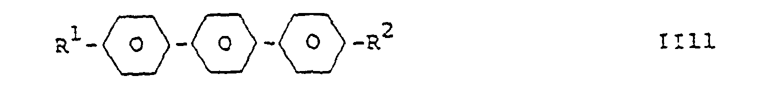 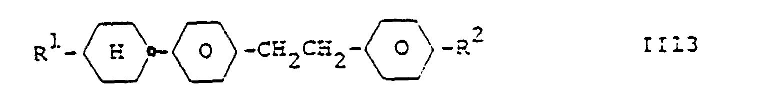 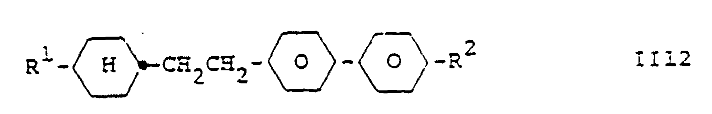 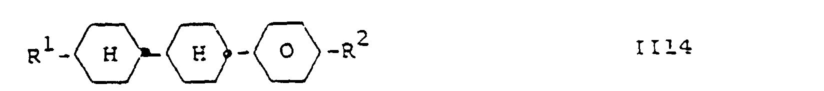 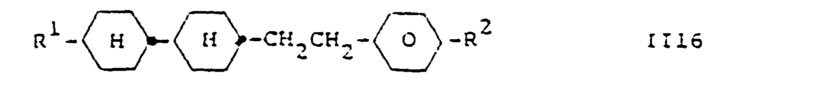 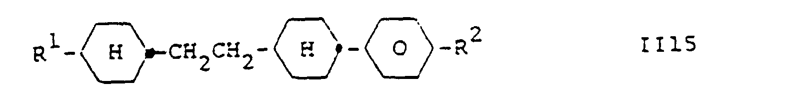 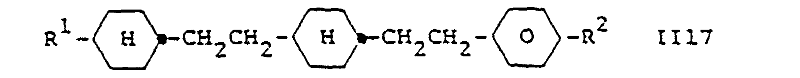 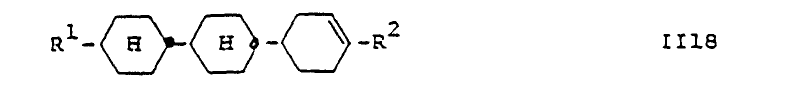 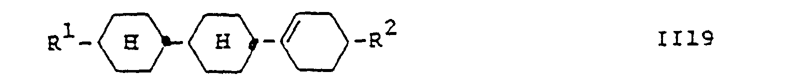 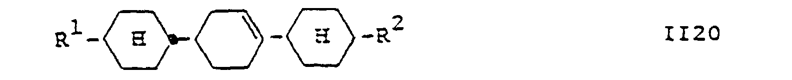 in which R¹ and R² are as defined in Claim 1, and the 1,4-phenylene groups in II8 to II17 may each, independently of one another, also be monosubstituted or polysubstituted by fluorine.

6. Display according to Claim 4 or 5, characterized in that component B additionally comprises one or more compounds selected from the group consisting of II21 to II25: 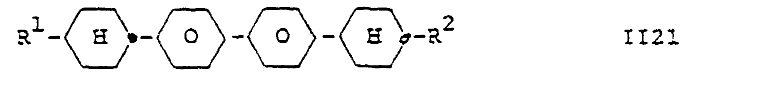 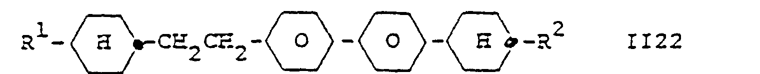 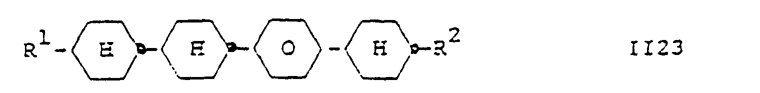 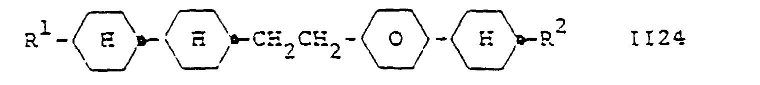 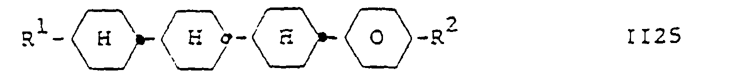 in which R¹ and R² are as defined in Claim 1, and the 1,4-phenylene groups in II21 to II25 may each, independently of one another, also be monosubstituted or polysubstituted by fluorine.

7. Display according to at least one of Claims 1 to 6, characterized in that component B comprises one or more compounds selected from the group consisting of II26 and II27: 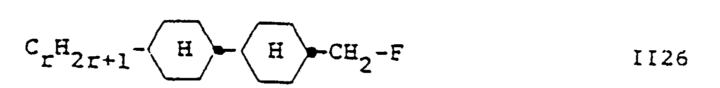 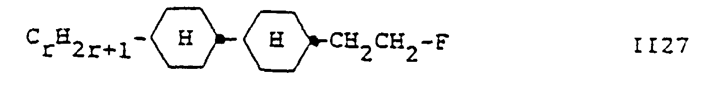 in which CᵣH₂ᵣ₊₁ is a straight-chain alkyl group having up to 7 carbon atoms.

8. Display according to at least one of Claims 1 to 7, characterized in that, besides components A, B and C, the liquid-crystal mixture additionally comprises one or more compounds selected from the group consisting of III and IV: 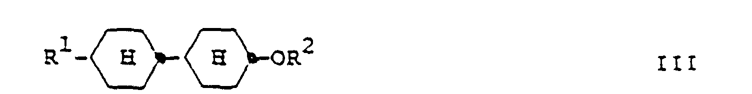 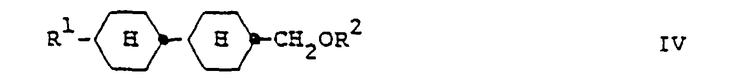 in which R¹ and R² are as defined in Claim 1.

9. Display according to at least one of Claims 1-8, characterized in that, besides components A, B and C, the liquid-crystal mixture additionally comprises one or more compounds selected from the group consisting of V and VI: 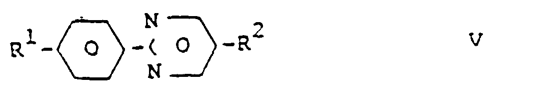 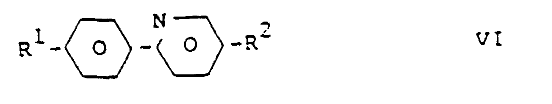 in which R¹ and R² are as defined in Claim 1.

10. Display according to at least one of Claims 1-9, characterized in that component C comprises one or more compounds selected from the group consisting of VII to XI: 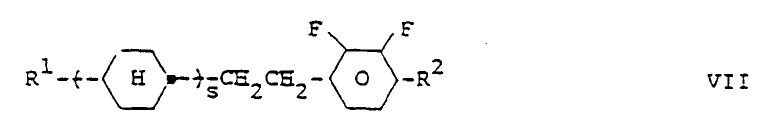 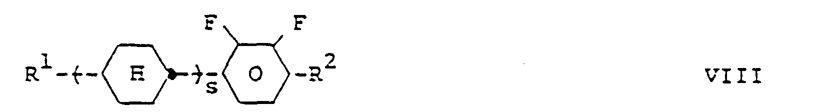 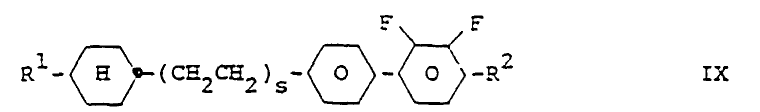 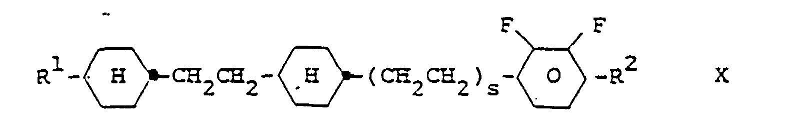 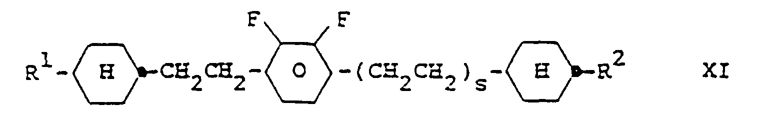 in which R¹ and R² are as defined in Claim 1, s is 0 or 1.

11. Display according to at least one of Claims 1-10, characterized in that component B comprises one or more compounds selected from the group consisting of XII to XIV: 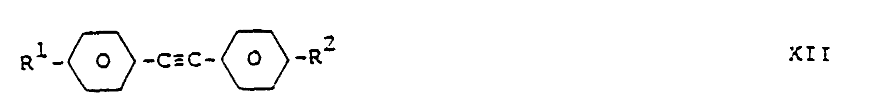 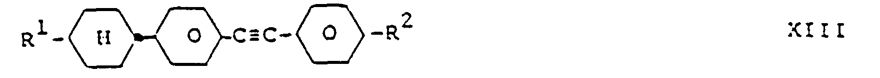 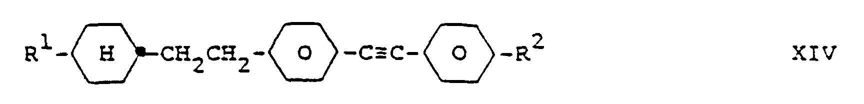 in which R¹ and R² are as defined in Claim 1.

12. Liquid-crystal mixture of the composition defined in one of Claims 1 - 11, characterized in that it has a high dielectric anisotropy Δε of > 5 and a high content of cyano compounds of greater than 20% by weight and less than 50% by weight.

## Revendications

1. Dispositif d'affichage à cristaux liquides supertorsadés comportant :
◆ deux plaques supports plan-parallèles, qui avec une bordure forment une cellule,
◆ un mélange de cristaux liquides nématiques se trouvant dans la cellule, présentant une anisotropie diélectrique positive,
◆ des couches électrodes, avec des couches d'orientation, disposées pardessus, sur les faces intérieures des plaques supports,
◆ un angle d'inclinaison d'environ 1 à 30 degrés entre l'axe longitudinal des molécules sur la surface des plaques supports et les plaques supports, et
◆ un angle de torsadage du mélange de cristaux liquides se trouvant dans la cellule, entre une couche d'orientation et la suivante, compris entre 100 et 600°, caractérisé en ce que le mélange de cristaux liquides nématiques
a) se fonde sur un composant A, qui contient un ou plusieurs composés choisis dans le groupe A, constitué de composés de formules IIa-IIc et IIe-IIk 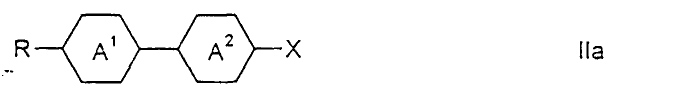 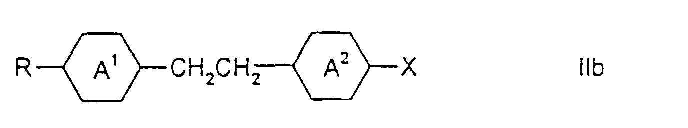 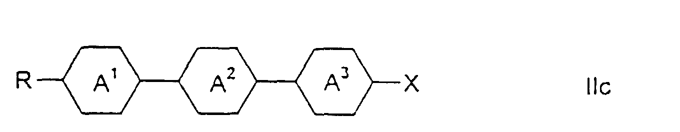 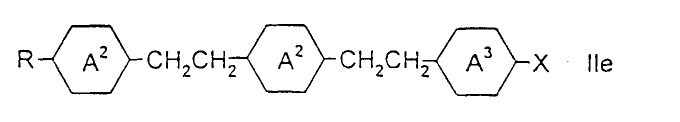 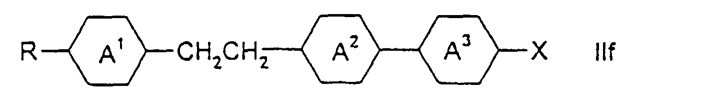 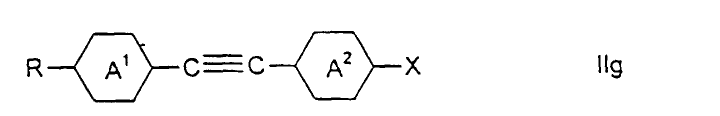 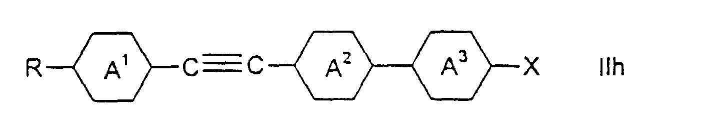 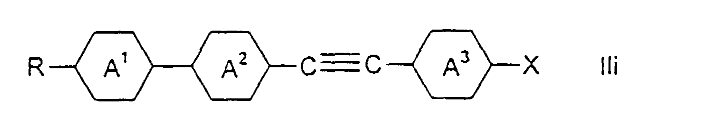 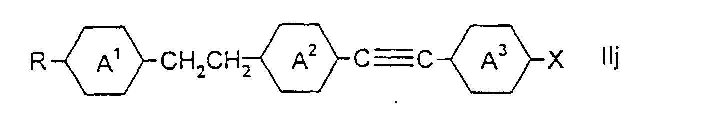 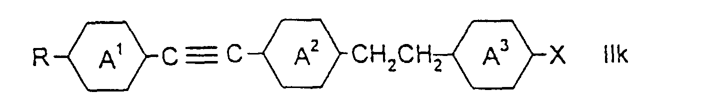 où
R est un groupe n-alkyle ou n-alcényle ayant jusqu'à 9 atomes de carbone,
X est F, Cl, -CF₃, -CHF₂, -OCF₃, -OCHF₂, -OCF₂CF₂H ou -OC₂F₅, et
chacun des noyaux A¹, A² et A³ représente indépendamment des autres un groupe 1,4-phénylène, 2- ou 3-fluoro-1,4-phénylène ou trans-1,4-cyclohexylène, ou encore l'un des noyaux A¹, A² et A³ représente aussi le groupe 1,4-cyclohexénylène ou 2,3-difluoro-1,4-phénylène,
b) contient de 0 à 40 % en poids d'un composant B mésomorphe, constitué d'un ou plusieurs composés ayant une anisotropie diélectrique de -1,5 à +1,5 de formule générale I 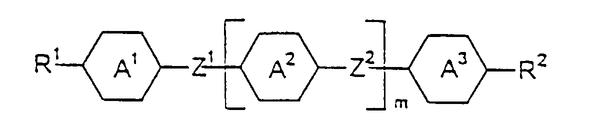 dans laquelle
R¹ et R² représentent chacun indépendamment de l'autre un groupe n-alkyle, n-alcoxy, n-oxaalkyle, ω-fluoralkyle ou n-alcényle ayant jusqu'à 9 atomes de carbone,
les noyaux A¹, A² et A³ représentent chacun indépendamment des autres un groupe 1,4-phénylène, 2- ou 3-fluoro-1,4-phénylène, trans-1,4-cyclohexylène ou 1,4-cyclohexénylène,
Z¹ et Z² représentent chacun indépendamment de l'autre -CH₂CH₂-, -C≡C- ou une liaison simple, et
m vaut 0, 1 ou 2,
c) contient de 0-20 % en poids d'un composant C mésomorphe, constitué d'un ou plusieurs composés ayant une anisotropie diélectrique inférieure à -1,5, et
d) contient un composant D optiquement actif, en une quantité telle que le rapport entre l'épaisseur de couche (distance entre les plaques supports plan-parallèles et le pas naturel du mélange de cristaux liquides nématiques chiraux) soit d'environ 0,2 à 1,3,
et que le mélange de cristaux liquides nématiques contient de 5 à 35 % de composés cristaux liquides de type tolane,
et que le mélange de cristaux liquides nématiques présente une étendue de phases nématiques d'au moins 60°C, une viscosité non-supérieure à 35 mPa.s et une anisotropie diélectrique d'au moins +1, les anisotropies diélectriques des composés et les paramètres concernant le mélange de cristaux liquides nématiques étant rapportés à une température de 20° C,
et que le composant A contient des composés de formules IIa à IIc et IIe à IIf où X est le groupe cyano, et des composés de formules IIa à IIc et IIe à IIf où X est -NCS, F, Cl, -CF₃, -CHF₂, -OCF₃, -OCHF₂, -OCF₂CF₂H ou -OC₂F₅, la proportion des composés cyano dans le composant A étant de 0 à 50 % en poids.

2. Dispositif d'affichage selon la revendication 1, caractérisé en ce que le composant A ne contient aucun composé de formules IIa à IIc et IIe à IIf dans lesquelles X serait le groupe cyano.

3. Dispositif d'affichage selon au moins l'une des revendications 1 et 2, caractérisé en ce que X est F, Cl, CF₃, -OCF₃, OCHF₂ ou -CHF₂.

4. Dispositif d'affichage selon l'une des revendications 1 3, caractérisé en ce que le composant B contient un ou plusieurs composés choisis dans le groupe constitué des composés de formules II1 à II7 : 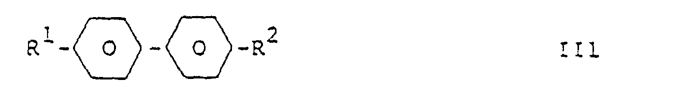 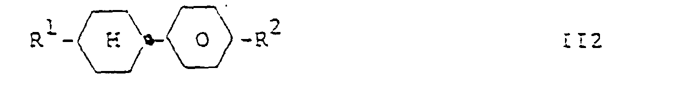 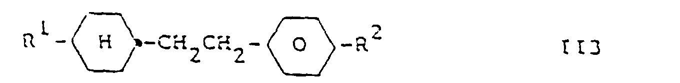 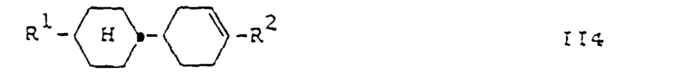 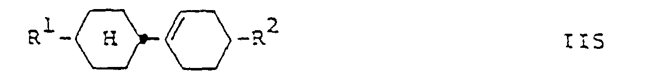 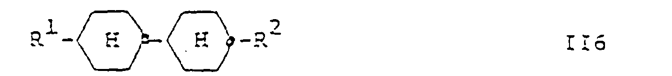 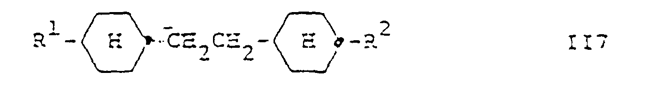 où R¹ et R² ont les significations données dans la revendication 1.

5. Dispositif d'affichage selon la revendication 4, caractérisé en ce que le composant B contient en outre un ou plusieurs composés choisis dans le groupe comprenant les composés de formules II8 à II20 : 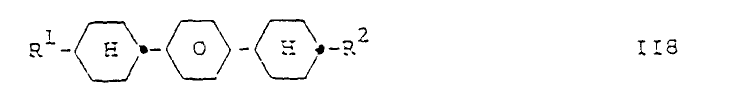 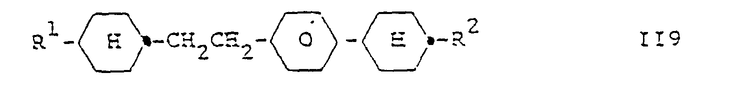 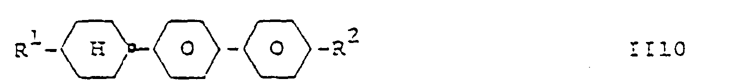 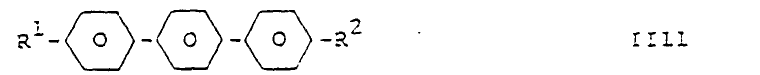 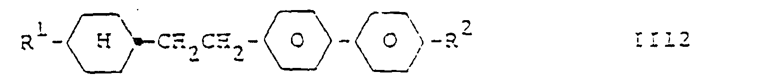 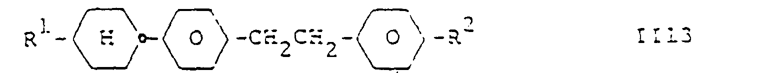 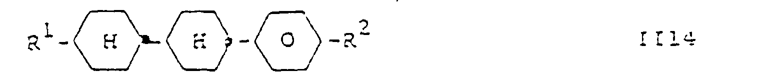 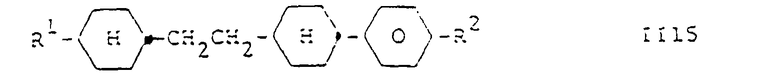 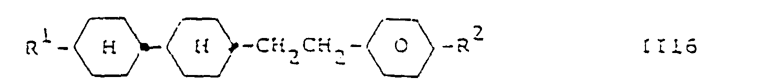 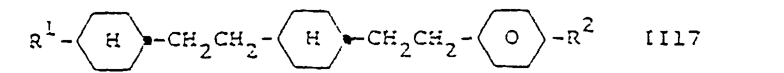 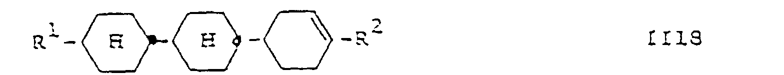 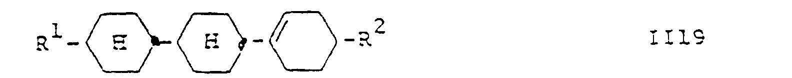 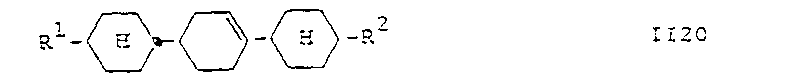 où R¹ et R² ont les significations données dans la revendication 1, et chacun des groupes 1,4-phénylène des mules II8 à II17 peut, indépendamment des autres, être aussi une ou plusieurs fois substitué par un substituant fluoro.

6. Dispositif d'affichage selon la revendication 4 ou 5, caractérisé en ce que le composant B contient en outre un ou plusieurs composés choisis dans le groupe constitué des composés de formules II21 à II25 : 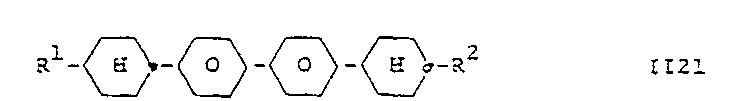 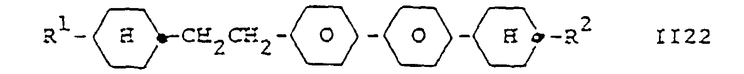 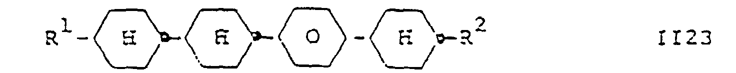 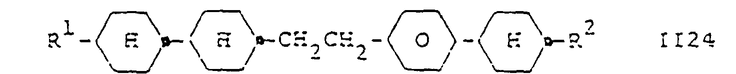 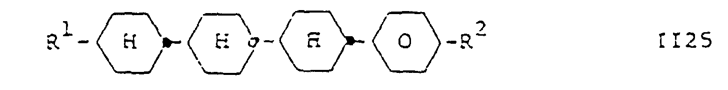 où R¹ et R² ont les significations données dans la revendication 1, et chacun des groupes 1,4-phénylène des formules II21 à II25 peut, indépendamment des autres, être aussi une ou plusieurs fois substitué par des substituants fluoro.

7. Dispositif d'affichage selon au moins l'une des revendications 1 à 6, caractérisé en ce que le composant B contient un ou plusieurs composés choisis dans le groupe constitué des composés de formules II26 et II27 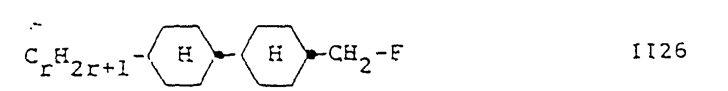 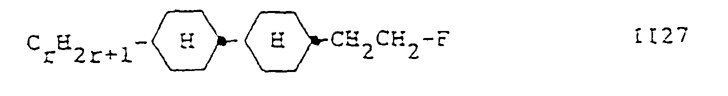 où CᵣH₂ᵣ₊₁ est un groupe alkyle à chaîne droite ayant jusqu'à 7 atomes de carbone.

8. Dispositif d'affichage selon au moins l'une des revendications 1 à 7, caractérisé en ce que le mélange de cristaux liquides contient encore, outre les composants A, B et C, un ou plusieurs composés choisis dans le groupe constitué des composés de formules III et IV 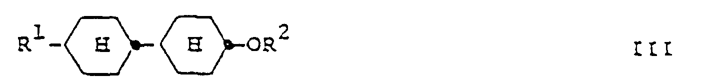 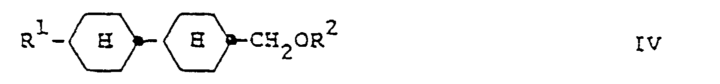 où R¹ et R² ont les significations données dans la revendication 1.

9. Dispositif d'affichage selon au moins l'une des revendications 1 à 8, caractérisé en ce que le mélange de cristaux liquides contient encore, outre les composants A, B et C, un ou plusieurs composés choisis dans le groupe constitué des composés de formules V et VI 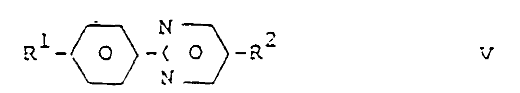 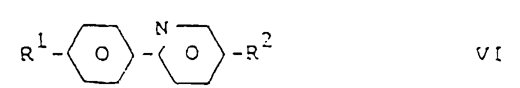 où R¹ et R² ont les significations données dans la revendication 1.

10. Dispositif d'affichage selon au moins l'une des revendications 1 à 9, caractérisé en ce que le composant C contient un ou plusieurs composés choisis dans le groupe constitué des composés de formules VII à XI 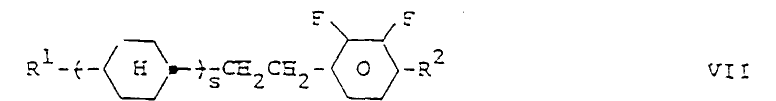 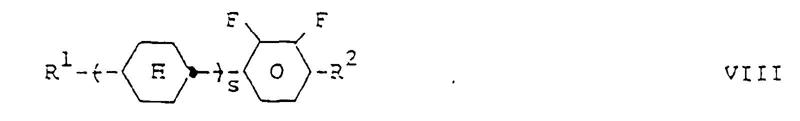 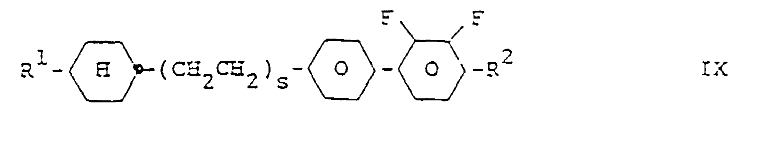 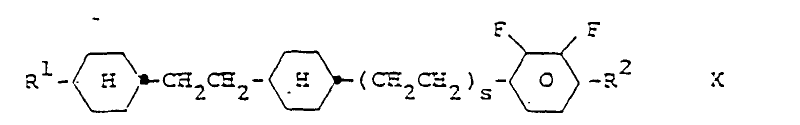 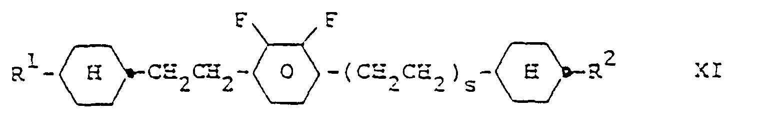 où R¹ et R² ont les significations données dans la revendication 1, et s vaut 0 ou 1.

11. Dispositif d'affichage selon au moins l'une des revendications 1 à 10, caractérisé en ce que le composant B contient un ou plusieurs composés choisis dans le groupe constitué des composés de formules XII à XIV 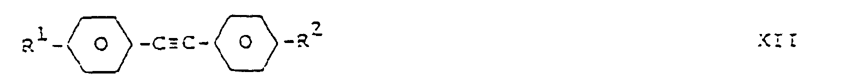 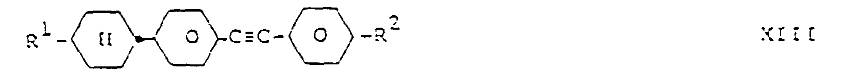 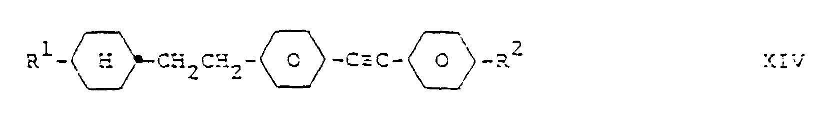 où R¹ et R² ont les significations données dans la revendication 1.

12. Mélange de cristaux liquides ayant la composition définie dans l'une des revendications 1 à 11, caractérisé en ce que ces dernières présentent une grande anisotropie diélectrique Δε > 5 et une proportion élevée de composés cyano, supérieure à 20 % en poids et inférieure à 50 % en poids.
